(19) Europäisches Patentamt
European Patent Office
Office européen des brevets

(11) **EP 3 257 882 B1**

(12) **EUROPÄISCHE PATENTSCHRIFT**

(45) Veröffentlichungstag und Bekanntmachung des Hinweises auf die Patenterteilung:
**30.11.2022   Patentblatt 2022/48**

(21) Anmeldenummer: **17175126.6**

(22) Anmeldetag: **09.06.2017**

(51) Internationale Patentklassifikation (IPC):
*C08G 18/32* (2006.01)    *C08G 18/42* (2006.01)
*C08G 18/66* (2006.01)    *C08G 18/22* (2006.01)
*C08G 18/73* (2006.01)    *C08G 18/79* (2006.01)
*C08K 5/109* (2006.01)    *C09J 175/06* (2006.01)
*C08G 18/12* (2006.01)    *C08G 18/08* (2006.01)
*C08G 18/10* (2006.01)    *C09J 7/38* (2018.01)
*C08K 5/10* (2006.01)

(52) Gemeinsame Patentklassifikation (CPC):
(C-Sets verfügbar)
**C08G 18/792; C08G 18/10; C08G 18/12;
C08G 18/227; C08G 18/3206; C08G 18/3221;
C08G 18/4238; C08G 18/664; C08G 18/73;
C09J 7/21; C09J 7/22; C09J 7/255; C09J 7/38;
C09J 175/06;** C08G 2170/40;            (Forts.)

(54) **BIOLOGISCH ABBAUBARE HAFTKLEBEMASSE**

BIODEGRADABLE  ADHESIVE COMPOUND

SUBSTANCE ADHÉSIVE BIODÉGRADABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.06.2016   DE 102016210898**

(43) Veröffentlichungstag der Anmeldung:
**20.12.2017   Patentblatt 2017/51**

(73) Patentinhaber: **tesa SE**
**22848 Norderstedt (DE)**

(72) Erfinder:
• **VON WEDEL-PARLOW, Tobias**
**22527 Hamburg (DE)**
• **STREBL-PFARR, Maike**
**22529 Hamburg (DE)**

(74) Vertreter: **tesa SE**
**Hugo-Kirchberg-Straße 1**
**22848 Norderstedt (DE)**

(56) Entgegenhaltungen:
**DE-A1-102014 211 186     US-A1- 2004 014 880**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)
C08K 5/10; C09J 2301/408; C09J 2400/263;
C09J 2400/283; C09J 2401/006; C09J 2403/006;
C09J 2467/006; C09J 2475/00

C-Sets
**C08G 18/10, C08G 18/792;**
**C09J 175/06, C08K 5/109;**
**C09J 175/06, C08K 5/42**

**Beschreibung**

Die Erfindung liegt auf dem Gebiet der Haftklebmassen, wie sie vielfältig zum temporären oder auch dauerhaften Verkleben unterschiedlichster Substrate verwendet werden. Speziell betrifft die Erfindung biologisch abbaubare Haftklebmassen auf PolyurethanBasis. Es wird der Zusatz eines bestimmten Netzmittels vorgeschlagen, wodurch sich in der Herstellung biologisch abbaubarer Klebebänder die Beschichtbarkeit von Releaselinern und überraschend auch die Bioabbaubarkeit verbessern lassen.

Haftklebrigkeit ist die Eigenschaft eines Stoffes, bereits unter relativ schwachem Andruck eine dauerhafte Verbindung zu einem Haftgrund einzugehen. Stoffe, die diese Eigenschaft besitzen, werden als Haftklebstoffe bezeichnet. Haftklebstoffe sind seit langem bekannt. Häufig können sie nach Gebrauch im Wesentlichen rückstandsfrei vom Haftgrund wieder abgelöst werden. Haftklebstoffe sind in der Regel bei Raumtemperatur permanent eigenklebrig, weisen also eine gewisse Viskosität und Anfassklebrigkeit auf, so dass sie die Oberfläche des jeweiligen Haftgrunds bereits bei geringem Andruck benetzen. Die Fähigkeit eines Haftklebstoffs, auf Werkstoffen zu haften und Kräfte zu übertragen, beruht auf dem Adhäsionsvermögen und der Kohäsion des Haftklebstoffs.

Haftklebstoffe können als extrem hochviskose Flüssigkeiten mit einem elastischen Anteil betrachtet werden. Sie haben demzufolge charakteristische viskoelastische Eigenschaften, die zu der dauerhaften Eigenklebrigkeit und Klebfähigkeit führen.

Kennzeichnend für sie ist, dass es, wenn sie mechanisch deformiert werden, sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des jeweiligen Haftklebstoffs als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein Auffließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in Form einer planparallelen Schicht in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel $\delta$ bezeichnet.

Der Speichermodul G' ist wie folgt definiert: G' = $(\tau/\gamma)$ * cos($\delta$) ($\tau$ = Schubspannung, $\gamma$ = Deformation, $\delta$ = Phasenwinkel = Phasenverschiebung zwischen Schubspannungs- und Deformationsvektor). Die Definition des Verlustmoduls G" lautet: G" = $(\tau/\gamma)$ * sin($\delta$) ($\tau$ = Schubspannung, $\gamma$ = Deformation, $\delta$ = Phasenwinkel = Phasenverschiebung zwischen Schubspannungs- und Deformationsvektor).

Ein Stoff und die daraus hergestellte Schicht gelten im Allgemeinen als haftklebrig und werden im Sinne dieser Schrift als haftklebrig definiert, wenn bei Raumtemperatur, hier definitionsgemäß bei 23 °C, im Deformationsfrequenzbereich von $10^0$ bis $10^1$ rad/sec G' und G" jeweils zumindest zum Teil im Bereich von $10^3$ bis $10^7$ Pa liegen.

Innerhalb dieses Bereiches, den man in einer Matrix-Auftragung aus G' und G" (G' aufgetragen in Abhängigkeit von G") auch als viskoelastisches Fenster für Haftklebeanwendungen oder als Haftklebstofffenster nach viskoelastischen Kriterien bezeichnen kann, gibt es wiederum unterschiedliche Sektoren und Quadranten, die die zu erwartenden Haftklebeeigenschaften der jeweils zugehörigen Stoffe näher charakterisieren. Stoffe mit hohem G" und niedrigem G' innerhalb dieses Fensters zeichnen sich beispielsweise im Allgemeinen durch eine hohe Klebkraft und eine geringe Scherfestigkeit aus, während sich Stoffe mit hohem G" und hohem G' sowohl durch eine hohe Klebkraft als auch durch eine hohe Scherfestigkeit auszeichnen.

Generell sind die Erkenntnisse über die Zusammenhänge zwischen Rheologie und Haftklebrigkeit Stand der Technik und beispielsweise in "Satas, Handbook of Pressure Sensitive Adhesive Technology, Third Edition, (1999), Seiten 153 bis 203" beschrieben.

Ein chemisch vernetzter Haftklebstoff oder Haftstoff liegt vor, wenn der Haftklebstoff oder Haftstoff durch eine chemische Umsetzung mit einem Vernetzer einen Zustand erreicht hat, der ihn nicht mehr schmelzbar und nicht mehr in organischen Lösemitteln lösbar macht. Eine Verflüssigung ist dann nur noch durch Zersetzung möglich, die irreversibel ist. Als Vernetzer kommen alle mindestens difunktionellen Stoffe in Betracht, die mit den funktionellen Gruppen des Haftklebstoffes oder Haftstoffes chemische Vernetzungsreaktionen eingehen können. Ihre Auswahl richtet sich nach den funktionellen Gruppen des Haftklebstoffes oder Haftstoffes. Carboxygruppen tragende Haftklebstoffe oder Haftstoffe werden typischerweise mit Di- oder Polyepoxiden, eventuell unter zusätzlicher Katalyse, beispielsweise durch tertiäre Amine, oder mit Metallacetylacetonaten, Metallalkoxiden sowie Alkoxy-Metallacetylacetonaten vernetzt. Für die Vernetzung von Hydroxygruppen tragenden Haftklebstoffen oder Haftstoffen bieten sich beispielsweise Di- oder Polyisocyanate an.

Polymere oder Präpolymere, die die Eigenschaft besitzen, schmelzfähig und somit thermoplastisch verarbeitbar zu sein, werden in dieser Schrift, wie im Sprachgebrauch des Fachmanns üblich, als Hotmelts bezeichnet.

Unter einem Polyurethan-Präpolymer wird in dieser Schrift ein zumindest oligomeres, bevorzugt jedoch bereits selbst polymeres, durch chemische Umsetzung eines oder mehrerer Polyole mit einem oder mehreren Polyisocyanaten erhaltenes, insbesondere schmelzfähiges Reaktionsprodukt verstanden, das unter signifikantem Anstieg der Molmasse in ein Zielpolymer überführt werden kann. Polyurethane enthalten Einheiten, die durch Urethan-Gruppierungen -NH-CO-O- miteinander verknüpft sind.

Ein Polyurethan-Hotmelt-Präpolymer im Sinne dieser Schrift ist bei Raumtemperatur derart fest und formstabil, dass in bekannten Mischaggregaten bei Raumtemperatur ein kontinuierliches, homogenes Mischen mit weiteren Stoffen sowie insbesondere auch eine Ausformung oder ähnliche Verarbeitungsschritte nicht möglich sind, ohne dass es dabei zur Erwärmung des Polyurethan-Hotmelt-Präpolymers kommt oder ohne dass ein Hinzufügen von Lösemitteln, Verdünnungsmitteln oder anderer die Viskosität herabsetzender Zusatzstoffe notwendig ist. Bekannte Mischaggregate sind beispielsweise Kneter, Innenmischer, Extruder, Planetwalzenextruder, Planetenmischer, Butterfly-Mischer oder Dissolver. Die Verarbeitbarkeit eines Polyurethan-Hotmelt-Präpolymers im Sinne dieser Schrift ist erst dann möglich, wenn das Polyurethan-Hotmelt-Präpolymer in einem Lösemittel aufgelöst oder wenn es erwärmt wird, wobei die Wärme von außen durch Beheizung zugeführt oder durch Scherung erzeugt werden kann. Typische Verarbeitungstemperaturen für Polyurethan-Hotmelt-Präpolymere im Sinne dieser Schrift liegen im Bereich von 70° bis 160 °C, mindestens betragen sie 40 °C. Als Raumtemperatur wird in dieser Schrift 23 °C verstanden. Schmelzen bedeutet in diesem Sinne nicht notwendigerweise, dass im Moment des Überganges vom festen, formstabilen Zustand zum verflüssigten, mischbaren Zustand eine kristalline Schmelztemperatur oder eine glasartige Erstarrungstemperatur überschritten werden muss. Gemeint ist an dieser Stelle eine ausreichende Erniedrigung der Viskosität.

Ein Polyurethan-Hotmelt-Präpolymer im Sinne dieser Schrift hat eine mit einem Rheometer im Oszillationsversuch bei einer sinusförmig oszillierenden Scherbeanspruchung in einer Platte-Platte-Anordnung, einer Temperatur von 23 °C und einer Oszillationsfrequenz von 10 rad/s gemessene komplexe Viskosität von mindestens 1000 Pa*s, vorzugsweise mindestens 3000 Pa*s.

Die komplexe Viskosität $\eta^*$ ist folgendermaßen definiert: $\eta^* = G^* / \omega$
($G^*$ = komplexer Schubmodul, $\omega$ = Winkelfrequenz).

Die weiteren Definitionen lauten: $G^* = \sqrt{(G')^2 + (G'')^2}$

($G''$ = Viskositätsmodul (Verlustmodul), $G'$ = Elastizitätsmodul (Speichermodul)).
$G'' = \tau/\gamma \cdot \sin(\delta)$ ($\tau$ = Schubspannung, $\gamma$ = Deformation, $\delta$ = Phasenwinkel = Phasenverschiebung zwischen Schubspannungs- und Deformationsvektor).
$G' = \tau/\gamma \cdot \cos(\delta)$ ($\tau$ = Schubspannung, $\gamma$ = Deformation, $\delta$ = Phasenwinkel = Phasenverschiebung zwischen Schubspannungs- und Deformationsvektor).
$\omega = 2\pi \cdot f$ (f = Frequenz).

Klebebänder, die mit Haftklebstoffen ausgerüstet sind, so genannte Haftklebebänder, werden heute im industriellen und privaten Bereich in vielfältiger Weise verwendet. Üblicherweise bestehen Haftklebebänder aus einer Trägerfolie, die ein- oder beidseitig mit einem Haftklebstoff ausgerüstet ist. Es gibt auch Haftklebebänder, die ausschließlich aus einer Haftklebstoffschicht und keiner Trägerfolie bestehen, die so genannten Transfer-Tapes. Die Zusammensetzung der Haftklebebänder kann sehr unterschiedlich sein und richtet sich nach den jeweiligen Anforderungen der unterschiedlichen Anwendungen. Die Träger bestehen üblicherweise aus Kunststofffolien wie zum Beispiel Polypropylen, Polyethylen, Polyester oder auch aus Papier, Gewebe oder Vliesstoff.

Die Haftklebstoffe bestehen üblicherweise aus Acrylat-Copolymeren, Silikonen, Naturkautschuk, Synthesekautschuk, Styrolblockcopolymeren oder Polyurethanen.

Aufgrund von ökologischen Gesichtspunkten, Nachhaltigkeit und vor dem Hintergrund der immer knapper werdenden Ressourcen an Erdöl und auf der anderen Seite eines weltweit stark wachsenden Verbrauches an Kunststoffen gibt es seit einigen Jahren die Bestrebung, Kunststoffe auf Basis von nachwachsenden Rohstoffen herzustellen. Dies gilt insbesondere für biologisch abbaubare Polymere, die in Verpackungsanwendungen oder Folienanwendungen Verwendung finden sollen. Auch für medizinische Anwendungen spielen biologisch abbaubare Produkte eine zunehmend wichtige Rolle. Einige biobasierte beziehungsweise bioabbaubare Kunststoffe sind heute kommerziell verfügbar. Biobasiert heißt "hergestellt aus nachwachsenden Rohstoffen".

"Bioabbaubare Polymere" ist eine Bezeichnung für natürliche und synthetische Polymere, die kunststoffähnliche Eigenschaften (Kerbschlagzähigkeit, Thermoplastifizierbarkeit) aufweisen, aber im Gegensatz zu konventionellen Kunststoffen von einer Vielzahl von Mikroorganismen in biologisch aktiver Umgebung (Kompost, Faulschlamm, Erde, Abwasser) abgebaut werden; dies passiert nicht notwendigerweise unter üblichen Haushaltsbedingungen (Kompostierung im Garten). Eine Definition der Bioabbaubarkeit findet sich in den Europäischen Normen DIN EN 13432 (biologischer Abbau von Verpackungen) und DIN EN 14995 (Kompostierbarkeit von Kunststoffen).

Der Fachmann unterscheidet zwischen der Desintegration (Zersetzung) und der biologischen Abbaubarkeit.

Die Desintegration (Zersetzung) bezeichnet die physikalische Zerlegung in sehr kleine Fragmente.

Die Bestimmung der Desintegrierbarkeit (des Zersetzungsgrades) von Polymeren wird unter anderem in der DIN EN ISO 20200 beschrieben. Hierbei wird die zu untersuchende Probe in einem definierten künstlichen Feststoffabfall bei $58 \pm 2$ °C für mindestens 45 und höchstens 90 Tage gelagert. Anschließend wird die gesamte Probe durch ein 2 mm Sieb gesiebt und der Zersetzungsgrad D wie folgt bestimmt.

$$D = \frac{m_i - m_r}{m_i} \times 100$$

Dabei ist

$m_i$: die anfängliche Trockenmasse des Probenmaterials und

$m_r$: die Trockenmasse des restlichen, durch Sieben erhaltenen Probenmaterials.

Unter der biologischen Abbaubarkeit versteht man im Allgemeinen die Zerlegbarkeit einer chemischen Verbindung oder eines organischen Materials durch Mikroorganismen in Gegenwart von Sauerstoff in Kohlendioxid, Wasser und Salze anderer vorhandener Elemente (Mineralisation) unter Bildung neuer Biomasse oder in Abwesenheit von Sauerstoff in Kohlendioxid, Methan, Mineralsalze und neue Biomasse. Der biologische Abbau erfolgt extra- und/oder intrazellulär durch Bakterien, Pilze und Mikroorganismen, sowie deren Enzyme.

Die biologische Abbaubarkeit von Verpackungsmaterialien wird in der DIN EN 13432 "Anforderungen an die Verwertung von Verpackungen durch Kompostierung und biologischen Abbau" normativ geregelt. Hierbei wird das zu prüfende Material einem aeroben Abbautest gemäß ISO 14855:1999 "Bestimmung der vollständigen aeroben Bioabbaubarkeit von Kunststoff-Materialien unter den Bedingungen kontrollierter Kompostierung" unterzogen und innerhalb von maximal sechs Monaten muss im Vergleich zu einer geeigneten Referenzsubstanz ein Abbaugrad von mindestens 90% erreicht werden. Der Abbaugrad wird dabei durch die gemessene Kohlenstoffdioxidentwicklung bestimmt. Die zerkleinerte Probe wird mit Vermiculit oder gut arbeitendem belüftetem Kompost als Inokulum in einem mit Luftzufuhr ausgestattetem Gefäß bei $58 \pm 2$ °C gelagert und die $CO_2$-Entwicklung fortlaufend aufgezeichnet. Aufgrund der apperativen Komplexität gibt es eine Reihe von Prüfinstituten, die sich auf die Prüfung spezialisiert haben und anschließend ein entsprechendes Zertifikat, wie etwa das OK compost von Vinçotte, ausstellen.

Nach Beendigung der Prüfung ergibt sich die Abbaurate Dt als:

$$D_t = \frac{(CO_2)_T - (CO_2)_B}{ThCO_2} \times 100$$

Dabei ist

$(CO_2)_T$: die kumulative Menge des in jedem die Prüfsubstanz enthaltendem Kompostiergefäß gebildeten Kohlendioxides in Gramm je Gefäß;

$(CO_2)_B$: die mittlere kumulative Menge an Kohlendioxid, das in den Blindwertgefäßen gebildet wird, in Gramm je Gefäß;

ThCO$_2$:   die theoretische Menge an Kohlendioxid, das durch die Prüfsubstanz gebildet werden kann, in Gramm je Gefäß.

Neben der Bioabbaubarkeit beinhaltet die DIN EN 13432 auch einen Test zur Bestimmung der Qualität des durch den Abbau entstehenden Komposts. Dieser darf keine negativen Auswirkungen auf das Pflanzenwachstum haben.

In der Regel weisen biologisch abbaubare Komponenten auch eine hohe Desintegrationsrate auf, wohingegen die Desintegration eines Werkstoffs nicht zwingend für eine biologische Abbaubarkeit spricht.

Aufgrund der Tatsache, dass ökologische Aspekte, die die biologische Abbaubarkeit betreffen, auch für Haftklebebänder eine immer wichtigere Rolle spielen, wurden in der Vergangenheit auch Haftklebebänder vorgestellt, die als Trägermaterial biologisch abbaubare Folien verwenden. Die verwendeten Folien basieren häufig auf Polymilchsäurecompounds. Polymilchsäure ist ebenso wie weitere biologisch abbaubare und für die Anwendung in Frage kommende thermoplastische Polymere relativ hart und spröde. Um für Folienanwendungen geeignet zu sein, müssen diese in Betracht kommenden biologisch abbaubaren Polymere mit weicheren Polymeren compoundiert werden, die häufig nicht oder schlechter biologisch abbaubar sind.

Hinsichtlich der Haftklebstoffe sind die Möglichkeiten weiter eingeschränkt. Haftklebstoffe sind amorphe Materialien mit niedrigem Glasübergangspunkt.

Die klassischen Gerüstpolymere wie Naturkautschuk, Styrolblockcopolymere oder Polyacrylate sind gemäß den in Europa zugrunde liegenden Normen wie zum Beispiel der DIN EN 13432 nicht biologisch abbaubar. Gleiches gilt für die übliche Tackifierharze wie Kolophoniumderivate, Kohlenwasserstoffharze oder Terpenphenolharze. Siliconhaftklebstoffe scheiden aufgrund ihrer hervorragenden Alterungsstabilität gänzlich aus. Kriterium für eine biologische Abbaubarkeit ist üblicherweise das Vorhandensein von Heteroatomen in der Kohlenstoffhauptkette. Eine chemische Bindung zwischen einem Kohlenstoffatom und einem Heteroatom wie zum Beispiel Sauerstoff oder Stickstoff ist instabiler und damit einem biologischen Abbau leichter zugänglich als eine Bindung zwischen zwei Kohlenstoffatomen.

Aufgrund dieser Gegebenheiten bieten sich Polyesterhaftklebstoffe für entsprechende Anwendungen an.

Die US 2004/01880 A beschreibt eine wässrige Polyurethanharzdispersion umfassend ein Polyesterpolyol auf Basis von ε-Caprolactam unter anderem zur Herstellung eines Klebebandes. Nicht beschrieben ist eine Haftklebemasse enthaltend mindestens 60 Gew,-% mindestens eines Polyurethans sowie mindestens einen sulfonierten Carbonsäureester als Dispersion in mindestens einem organischen Lösemittel.

DE 10 2014 211 186 A beschreibt Polyurethanzusammensetzungen zur Verwendung in einem Klebeband, jedoch keinen sulfonierten Carbonsäureester.

In JP 2007 070 422 A1 wird ein biologisch abbaubarer Haftklebstoff auf Basis eines Polyesterpolyurethans beschrieben, der aber den Nachteil hat, schmelzfähig zu sein. Mit schmelzfähigen Haftklebstoffen sind prinzipiell keine guten Verklebungsfestigkeiten bei höheren Temperaturen erzielbar.

Aus JP 63 189 486 A ist ein feuchtigkeitshärtender Haftklebstoff auf Basis eines Polyesterpolyurethans bekannt. Feuchtigkeitshärtende Haftklebstoffe sind für die Verwendung in Klebebändern problematisch, da ein effektiver Schutz vor Feuchtigkeitszutritt vor der Applikation notwendig ist.

In JP 08 157 798 A wird vorgeschlagen, ein flüssiges Polycaprolacton-Diol und eine Dicarbonsäure mit Di- oder Polyisocyanaten zu einem Haftklebstoff umzusetzen. Das beschriebene Reaktivsystem ist zunächst flüssig. Erst nachdem der Haftklebstoff durch die beschriebene chemische Reaktion entstanden ist, tritt eine Verfestigung ein. Flüssige Reaktivsysteme haben im Hinblick auf eine kontinuierliche Beschichtung, die in der Regel den zentralen Prozessschritt einer üblichen Klebebandfertigung darstellt, den Nachteil, dass sie in diesem Zustand nicht oder zumindest nicht mit konstanter Schichtdicke auf einem Trägermaterial aufgewickelt werden können, insbesondere dann nicht, wenn es sich um hohe Schichtdicken handelt.

Biologisch abbaubare Haftklebmassen und Klebebänder werden auch in WO 2015/189326 A1 und in WO 2015/189323 A1 beschrieben.

Besondere Herausforderungen ergeben sich bei der Herstellung biologisch abbaubarer Klebebänder. Für derartige Klebebänder werden naturgemäß auch bioabbaubare Trägermaterialien eingesetzt. Diese sind häufig aber wenig temperatur- bzw. lösemittelbeständig, was zum Beispiel auf Polymilchsäure-basierte Materialien zutrifft. Daher können solche Träger vielfach nicht direkt beschichtet werden. In diesem Fall beschichtet man zunächst auf einen - in der Regel nicht bioabbaubaren - temporären Träger und laminiert erst nach Entfernung des Lösemittels und nach Abkühlung auf den bioabbaubaren Träger.

Dabei jedoch stellt sich das Problem, dass Polyurethan-basierte, bioabbaubare Haftklebmassen aufgrund der hohen Polaritätsdifferenzen zu den meistens wenig polaren Releasebeschichtungen der temporären Trägermaterialien dazu neigen, diese Trägermaterialien wenig zu benetzen. Folglich lassen sich die Haftklebmassen nur schlecht auf solche Träger auftragen, und der gesamte Prozess ist in Frage gestellt.

Aufgabe der Erfindung ist es, ein Verfahren zur Herstellung biologisch abbaubarer Klebebänder zur Verfügung zu stellen, mit dem auf praktikable Weise bioabbaubare Haftklebmassen auf bioabbaubare Trägermaterialien aufgebracht werden können und mit dem leistungsstarke bioabbaubare Klebebänder erhalten werden können.

Der Lösung der Aufgaben liegt der Gedanke zugrunde, Polyurethan-basierte, biologisch abbaubare Haftklebmassen einzusetzen und diesen spezielle Netzmittel beizugeben.

Ein erster, allgemeiner Gegenstand der Erfindung ist ein Verfahren zur Herstellung eines biologisch abbaubaren Klebebandes, umfassend

- das Bereitstellen einer biologisch abbaubaren Haftklebmasse, die mindestens 60 Gew.-% mindestens eines Polyurethans sowie mindestens einen sulfonierten Carbonsäureester enthält, als Dispersion in mindestens einem organischen Lösemittel,
- das Beschichten dieser Dispersion auf einen Releaseliner,
- das Entfernen des organsichen Lösemitttels, und
- das Übertragen der Haftklebemasse auf einen biologisch abbaubaren Träger.

Es hat sich gezeigt, dass sich die erfindungsgemäß eingesetzte Haftklebmasse sehr gut auf temporäre Trägermaterialien beschichten lässt, beispielsweise auf herkömmliche, silikonisierte Releaseliner. Es werden dabei Benetzungsgrade von 95 bis 100 % erzielt. Wie sich ebenfalls gezeigt hat, wird die biologische Abbaubarkeit der Haftklebmassen durch den Zusatz des bzw. der sulfonierten Carbonsäureester(s) in vielen Fällen sogar noch verbessert.

Das mindestens eine Polyurethan ist bevorzugt durch chemische Vernetzung eines Polyurethan-Präpolymers erhältlich, das seinerseits durch chemische Reaktion von

a) einem oder mehreren aliphatischen Polyester-Polyolen A mit einer Hydroxy-Funktionalität von 1,8 bis einschließlich 2 und einem zahlengemittelten Molekulargewicht von gleich/größer 1000 g/mol;
b) einer oder mehreren Verbindungen B mit einer Hydroxy-Funktionalität von 1,8 bis einschließlich 2 und einem zahlengemittelten Molekulargewicht von kleiner 1000 g/mol;
c) einem oder mehreren aliphatischen Diisocyanaten C erhältlich ist;

wobei das Verhältnis der Gesamtanzahl der Isocyanat-Gruppen zur Gesamtanzahl der Hydroxygruppen der an der chemischen Reaktion zum Aufbau des Polyurethan-Präpolymers beteiligten Stoffe größer/gleich 0,4 und kleiner 1 ist.

Das zahlengemittelte Molekulargewicht der Polyester-Polyole A beträgt bevorzugt mehr als 1500 g/mol und besonders bevorzugt mehr als 2000 g/mol.

Unter der Hydroxy-Funktionalität wird die Zahl der Hydroxygruppen pro Molekül eines Polyols verstanden. Sie wird in dieser Schrift auf das zahlengemittelte mittlere Molekulargewicht des jeweiligen Polyols bezogen und nach der folgenden Formel berechnet:

$$f = M_n[g/mol] \times OHZ \ [mmol \ OH/kg]/10^6$$

f ist die Hydroxy-Funktionalität. $M_n$ ist das zahlengemittelte mittlere Molekulargewicht des jeweiligen Polyols in der Einheit [g/mol] und OHZ ist die Hydroxylzahl des Polyols in der Einheit [mmol OH / kg].

Die Hydroxylzahl ist ein Maß für den Gehalt an Hydroxygruppen in einem Polyol. Die Bestimmung der Hydroxylzahl erfolgt nach DIN 53240. Nach dieser Methode wird die Hydroxylzahl (OHZ) in der Einheit [mg KOH/g] angegeben. Sie entspricht der Menge KOH in [mg], welche der bei der Acetylierung von 1 g Polyol gebundenen Menge Essigsäure gleichwertig ist. Zum Zwecke der Vereinfachung der Rezepturberechnungen wird die Hydroxylzahl in dieser Schrift in die Einheit [mmol OH/kg] umgerechnet.

Dies erfolgt nach folgender Formel:

$$OHZ \ [mmol \ OH/kg] = OHZ \ [mg \ KOH/g] \times 1000/56,1.$$

56, 1 ist dabei die Molmasse von KOH.

Die bevorzugte Hydroxy-Funktionalität der Polyester-Polyole A von 1,8 bis 2 steht für einen hohen Grad an Difunktionalität, so dass auf diese Weise der Aufbau linearer Präpolymere ermöglicht wird.

Als Polyesterpolyole A kommen alle handelsüblichen aliphatischen Polyesterpolyole mit dem beschriebenen Molekulargewicht in Frage, sofern sie die bevorzugte Hydroxy-Funktionalität aufweisen. Bevorzugte Polyester-Polyole werden im Allgemeinen durch Polykondensation aus Diolen und Dicarbonsäuren gewonnen oder im Falle von Polycaprolacton-Polyolen durch Ringöffnungspolymerisation aus ε-Caprolacton und einem difunktionellen Startermolekül.

Vorzugsweise ist/sind zumindest eines der Polyester-Polyole A, stärker bevorzugt das Polyesterpolyol A bzw. die Polyesterpolyole A, das Produkt einer chemischen Reaktion von einer oder mehreren organischen Dicarbonsäure(n) ausgewählt aus der Gruppe bestehend aus Adipinsäure, Maleinsäure, Bernsteinsäure, Caprolactonen, Fumarsäure, Pimelinsäure, Suberinsäure und Glutarsäure; besonders bevorzugt ausgewählt aus der Gruppe bestehend aus Adipinsäure, Bernsteinsäure, Caprolactonen, Fumarsäure, Pimelinsäure, Suberinsäure und Glutarsäure; mit einem oder mehreren Diol(en) ausgewählt aus der Gruppe bestehend aus Ethylenglykol, Diethylenglykol, Triethylenglykol, 1,2-Propylenglykol, 1,3-Propandiol, 1,4-Butandiol, 1,6-Hexandiol, 3-Methyl-1,5-pentandiol, 2,2,4-Trimethyl-pentan-1,3-diol, 2-Butyl-2-ethyl-1,3-propandiol, 2,2-Dimethyl-1,3-propandiol, 2-Methyl-1,3-propandiol, 2-Ethyl-1,3-Hexandiol.

Besonders bevorzugt ist der Dicarbonsäure-Baustein der Polyester-Polyole Adipinsäure und/oder ε-Caprolacton. Bevorzugte Polyester-Polyole sind somit Polyadipat-Polyole und/oder Polycaprolacton-Polyole.

Der Alkohol-Baustein der Polyester-Polyole ist bevorzugt Ethylenglykol, Diethylenglykol, 1,4-Butandiol und/oder 1,6-Hexandiol. Besonders bevorzugt ist mindestens eines der Polyester-Polyole ein Polyadipat-Polyol, welches Ethylenglykol und/oder Diethylenglykol als Monomerbaustein enthält.

Es hat sich ferner herausgestellt, dass Methylgruppen tragende Polyester-Polyole, also Polyester-Polyole, die zum Beispiel 2-Methyl-1,3-Propandiol, 3-Methyl-1,5-Pentandiol oder Neopentylglykol als Alkohol-Baustein enthalten, zur Erzielung gewünschter Haftklebeleistungen vorteilhaft sein können, für eine schnelle biologische Abbaubarkeit der damit hergestellten Polyurethane aber eher nachteilig sind. Überraschenderweise lassen sich jedoch auch Polyurethane, die aus solche Bausteine enthaltenden Präpolymeren aufgebaut wurden, in Kombination mit den übrigen hierin beschriebenen Komponenten hinreichend schnell biologisch abbauen.

Vorzugsweise sind die Polyester-Polyole A aus erneuerbaren Rohstoffquellen, zum Beispiel durch Fermentation von Stärke oder Zucker, hergestellt.

Die Verbindungen B sind bevorzugt ausgewählt aus der Gruppe bestehend aus Polyesterdiolen mit einem zahlengemittelten Molekulargewicht von bis zu 600 g/mol, stärker bevorzugt von bis zu 450 g/mol; 2-Methyl-1,3-Propandiol, 3-Methyl-1,5-Pentandiol, Ethylenglykol, Diethylenglykol, Triethylenglykol, Tetraethylenglykol, Propylenglykol, Dipropylenglykol, Tripropylenglykol, 1,3-Propandiol, 1,3-Butandiol, 1,4-Butandiol, Neopentylglykol, 1,6-Hexandiol, 2-Ethyl-1,3-hexandiol und 2-Butyl-2-Ethyl-1,3-Propandiol. Besonders bevorzugt sind die Verbindungen B ausgewählt aus der Gruppe bestehend aus Polyesterdiolen mit einem zahlengemittelten Molekulargewicht von bis zu 450 g/mol, 2-Methyl-1,3-Propandiol (CAS-Nr.: 2163-42-0), 3-Methyl-1,5-Pentandiol (CAS-Nr.: 4457-71-0), Ethylenglykol (CAS-Nr.: 107-21-1), Diethylenglykol (CAS-Nr.: 111-46-6), Triethylenglykol (CAS-Nr.: 112-27-6) und Tetraethylenglykol (CAS-Nr.: 112-60-7). Insbesondere ist die Verbindung B Diethylenglykol und/oder ein Polyesterdiol mit einem zahlengemittelten Molekulargewicht von bis zu 450 g/mol.

Geeignete Diisocyanate C sind beispielsweise: Butan-1,4-diisocyanat, Tetramethoxybutan-1,4-diisocyanat, Pentan-1,5-diisocyanat, Hexan-1,6-diisocyanat, Ethylendiisocyanat, 2,2,4-Trimethyl-hexamethylendiisocyanat, Ethylethylendiisocyanat, Dicyclohexylmethandiisocyanat, 1,4-Diisocyanatocyclohexan, 1,3-Diisocyanatocyclohexan, 1,2-Diisocyanatocyclohexan, 1,3-Diisocyanatocyclopentan, 1,2-Diisocyanatocyclopentan, 1,2-Diisocyanatocyclobutan, 1-Isocyanatomethyl-3-isocyanato-1,5,5-trimethylcyclohexan (Isophorondiisocyanat), 1-Methyl-2,4-diisocyanato-cyclohexan, 1,6-Diisocyanato-2,2,4-trimethylhexan, 1,6-Diisocyanato-2,4,4-trimethylhexan, 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-1-(4-isocyanatobut-1-yl)-1,3,3-trimethyl-cyclohexan, 1-Isocyanato-2-(3-isocyanatoprop-1-yl)-cyclohexan, 1-Isocyanato-2-(2-isocyanatoeth-1-yl)-cyclohexan, 2-Heptyl-3,4-bis(9-isocyanatononyl)-1-pentyl-cyclohexan, Norbonandiisocyanatomethyl, hydrierte Diphenylmethandiisocyanate wie 4,4'-Diisocyanatodicyclohexylmethan, sowie chlorierte, bromierte, schwefel- oder phosphorhaltige aliphatische Diisocyanate.

Besonders bevorzugt sind die Diisocyanate C ausgewählt aus der Gruppe bestehend aus Isophorondiisocyanat, 4,4'-Diisocyanatodicyclohexylmethan, Pentan-1,5-diisocyanat und Hexan-1,6-diisocyanat.

Bevorzugt verläuft die chemische Reaktion, durch die das Polyurethan-Präpolymer erhältlich ist, in Gegenwart mindestens eines Bismutcarboxylat- oder Bismutcarboxylatderivat-haltigen Katalysators oder Katalysatorgemisches, dessen Verwendung zur Beschleunigung von Polyurethan-Reaktionen grundsätzlich bekannt ist. Ein derartiger Katalysator steuert die Haftklebeigenschaften des aus dem Präpolymer herzustellenden Polyurethans erheblich in der Weise, dass eine oberflächenspezifische Selektivität der Haftklebeigenschaften erreicht wird. Beispiele für entsprechende Katalysatoren sind Bismuttrisdodecanoat, Bismuttrisdecanoat, Bismuttrisneodecanoat, Bismuttrisoctanoat, Bismuttrisisooctanoat, Bismuttrishexanoat, Bismuttrispentanoat, Bismuttrisbutanoat, Bismuttrispropanoat und Bismuttrisacetat.

Es können aber auch andere bekannte Katalysatoren eingesetzt werden wie zum Beispiel tertiäre Amine oder zinnorganische Verbindungen.

Das Verhältnis der Gesamtanzahl der Isocyanat-Gruppen zur Gesamtanzahl der Hydroxygruppen der an der chemischen Reaktion zum Aufbau des Polyurethan-Präpolymers beteiligten Stoffe ist bevorzugt größer/gleich 0,7 und kleiner 1; stärker bevorzugt größer/gleich 0,7 und kleiner/gleich 0,95; besonders bevorzugt größer/gleich 0,75 und kleiner/gleich 0,9. Der Ausdruck "an der chemischen Reaktion beteiligte Stoffe" bezeichnet erfindungsgemäß sämtliche Reaktanden, die zum Zwecke der beabsichtigten chemischen Reaktion miteinander in Kontakt gebracht werden, unabhängig davon, ob die Moleküle der jeweiligen Substanzen tatsächlich sämtlich oder nur zum Teil abreagieren.

Bevorzugt beträgt das Stoffmengenverhältnis der Summe bzw. der Gesamtheit der Verbindungen B zu der Summe bzw. der Gesamtheit der Polyester-Polyole A 0,30 bis 2,33; besonders bevorzugt 0,45 bis 1,5 und insbesondere 0,5 bis 1.

Bevorzugte, durch die Vernetzung der vorstehend beschriebenen Präpolymere erhältliche Polyurethane der erfindungsgemäß bereitgestellten Haftklebmasse sind sehr gut biologisch abbaubar. Aufgrund der hohen linearen Strukturanteile wäre zu erwarten gewesen, dass die Polyurethane überhaupt keine oder zumindest nur schwach ausgeprägte Haftklebeigenschaften aufweisen würden. Überraschend hat sich jedoch gezeigt, dass die Polyurethane über einen breiten Bereich sehr gute Haftklebeigenschaften aufweisen. So wurden Klebkräfte auf Stahl (180°, 300 mm/min, in Anlehnung an PSTC-1) von mindestens 0,5 N/cm erhalten.

Bevorzugt erfolgt die chemische Vernetzung des Präpolymers zum Erhalt des bevorzugten Polyurethans mit mindestens einem Polyisocyanat D mit drei oder mehr Isocyanatgruppen. Bevorzugte Polyisocyanate D sind die Trimere der Diisocyanate C, insbesondere die Trimere von Hexan-1,6-diisocyanat und Pentan-1,5-diisocyanat. Das Verhältnis der Summe der Isocyanatgruppen aller Polyisocyanate C und D zur Summe der Hydroxygruppen der Komponenten A und B beträgt bevorzugt 0,95 bis 1,05.

Die chemische Vernetzung zum Erhalt des bevorzugten Polyurethans kann grundsätzlich lösemittelfrei - also in der Schmelze -, in einem organischen Lösemittel oder in wässriger Dispersion erfolgen. In den beiden letzteren Fällen liegen sowohl das Polyurethan-Präpolymer als auch der Vernetzer, bevorzugt also das/die Polyisocyanat(e) D, in einem organischen Lösemittel gelöst bzw. in Wasser dispergiert vor. Im Einklang mit dem erfindungsgemäßen Verfahren zur Herstellung eines erfindungsgemäß hergestellten Klebebands erfolgt die Vernetzung zum Erhalt des Polyurethans bevorzugt zu wesentlichen Teilen nach dem Ausbringen einer Dispersion des mit dem Vernetzer abgemischten Präpolymers auf einem temporären Träger, während das organische Lösemittel entfernt wird. Trocknung und Vernetzung laufen also bevorzugt weitgehend simultan ab.

Die erfindungsgemäß bereitgestellte Haftklebmasse enthält das/die Polyurethan(e), insbesondere das/die bevorzugte(n) Polyurethan(e), bevorzugt zu mindestens 70 Gew.-%, besonders bevorzugt zu mindestens 80 Gew.-%, insbesondere zu mindestens 90 Gew.-%, ganz besonders bevorzugt zu mindestens 95 Gew.-%, beispielsweise zu mindestens 97 Gew.-%. Ein Vorteil dieser Haftklebmasse ist, dass sie - zumindest zu großen Teilen - im wässrigen Medium biologisch abbaubar und in einem standardisierten Kompost desintegrierbar ist.

Wie bereits dargelegt, ist das bevorzugte Polyurethan für sich genommen haftklebrig. Durch gezieltes Führen der Reaktionen zum Aufbau und zur Vernetzung des Polyurethan-Präpolymers lassen dich die Haftklebeeigenschaften des bevorzugten Polyurethans in einem breiten Bereich einstellen.

In einer weiteren Ausführungsform der erfindungsgemäß bereitgestellten Haftklebmasse ist das mindestens eine Polyurethan ein chemisches Umsetzungsprodukt aus

- zumindest einem oder mehreren aliphatischen Polyester-Polyolen mit einer Hydroxy-Funktionalität von jeweils zwischen größer zwei und kleiner vier;
- zumindest einem oder mehreren aliphatischen Polyester-Polyolen mit einer Hydroxy-Funktionalität von jeweils zwischen kleiner oder gleich zwei und größer eins;
- zumindest einem oder mehreren jeweils zweifach Hydroxy-funktionalisierten Kettenverlängerern mit einem Molekulargewicht von jeweils kleiner oder gleich 200 g/mol; und
- zumindest einem oder mehreren aliphatischen Diisocyanaten,

wobei das Verhältnis der Gesamtanzahl der Isocyanat-Gruppen zur Gesamtanzahl der Hydroxygruppen der an der chemischen Umsetzung zum chemischen Umsetzungsprodukt eingebrachten Stoffe zwischen größer oder gleich 0,4 und kleiner 1,0, bevorzugt zwischen größer oder gleich 0,6 und kleiner oder gleich 0,9 beträgt.

Unter einem aliphatischen Polyester-Polyol wird hier ein acyclisches oder cyclisches, gesättigtes oder ungesättigtes Polyester-Polyol verstanden, das in seiner chemischen Struktur keine aromatischen Ringe enthält.

Als Polyesterpolyole der weiteren Ausführungsform kommen alle handelsüblichen aliphatischen Polyesterpolyole in Frage. Polyester-Polyole werden im Allgemeinen durch Polykondensation aus Diolen oder Triolen oder höher funktionellen Alkoholen und Dicarbonsäuren gewonnen oder im Falle von Polycaprolacton-Polyolen durch Ringöffnungspolymerisation aus ε-Caprolacton und einem di- oder tri- oder höher funktionellem Startermolekül.

Hinsichtlich des Dicarbonsäure-Bausteins der Polyester-Polyole der weiteren Ausführungsform ist Adipinsäure bevorzugt. Bevorzugte Polyester-Polyole sind somit Polyadipat-Polyole. Ebenfalls bevorzugt sind Polycaprolacton-Polyole.

Hinsichtlich des Diol-, Triol- oder höher funktionellen Alkohol-Bausteins der Polyester-Polyole der weiteren Ausführungsform sind Ethylenglykol oder Diethylenglykol bevorzugt. Besonders bevorzugt ist mindestens eines der aliphatischen Polyester-Polyole ein Polyadipat-Polyol, welches Ethylenglykol oder Diethylenglykol als Monomerbaustein enthält.

1,4- Butandiol und 1,6-Hexandiol sind ebenfalls geeignet. Auch Gemische der genannten Diole sind gut geeignet. Ebenfalls vorteilhaft sind im Polyester-Polyol enthaltene Carbonatgruppen. Im Sinne der Erzielung einer schnellen biologischen Abbaubarkeit nachteilig sind tri- und höherfunktionelle Polyester-Polyole sowie Methylgruppen tragende Polyester-Polyole, also Polyester-Polyole, die zum Beispiel 2-Methyl-1,3-Propandiol, 3-Methyl-1,5-Pentandiol oder Neopentylglykol als Alkohol-Baustein enthalten.

Bevorzugte Kettenverlängerer sind 2-Methyl-1,3-Propandiol (CAS-Nr.: 2163-42-0), 3-Methyl-1,5-Pentandiol (CAS-Nr.: 4457-71-0), Ethylenglykol (CAS-Nr.: 107-21-1) oder besonders bevorzugt Diethylenglykol (CAS-Nr.: 111-46-6), Triethylenglykol (CAS-Nr.: 112-27-6) oder Tetraethylenglykol (CAS-Nr.: 112-60-7). Gut geeignet sind auch Propylenglykol, Dipropylenglykol, Tripropylenglykol, 1,3-Propandiol, 1,3-Butandiol, 1,4-Butandiol, Neopentylglykol, 1,6-Hexandiol, 2-Ethyl-1,3-hexandiol und 2-Butyl-2-Ethyl-1,3-Propandiol. Andere bekannte Kettenverlängerer mit einem Molekulargewicht von kleiner oder gleich 200 g/mol sind vom Erfindungsgedanken nicht ausgeschlossen.

Als Diisocyanate der weiteren Ausführungsform werden aliphatische Diisocyanate verwendet. Unter aliphatischen Diisocyanaten werden hier acyclische oder cyclische, gesättigte oder ungesättigte Diisocyanate verstanden, die in ihrer chemischen Struktur keine aromatischen Ringe enthalten.

Sehr bevorzugt ist zumindest eines der aliphatischen Diisocyanate 4,4'-Diisocyanatodicylohexylmethan, abgekürzt $H_{12}MDI$ (CAS-Nr.: 5124-30-1) oder Hexamethylendiisocyanat, abgekürzt HDI (CAS-Nr.: 822-06-0). Besonders bevorzugt im Hinblick auf die Schnelligkeit der biologischen Abbaubarkeit sind Pentamethylendiisocyanat und Hexamethylendiisocyanat.

1-Isocyanatomethyl-3-isocyanato-1,5,5-trimethylcyclohexan (Isophorondiisocyanat) kann ebenfalls verwendet werden:

Weitere Beispiele für geeignete Diisocyanate sind:

Butan-1,4-diisocyanat, Tetramethoxybutan-1,4-diisocyanat, Ethylendiisocyanat, 2,2,4-Trimethyl-hexamethylendiisocyanat, Ethylethylendiisocyanat, 1,4-Diisocyanatocyclohexan, 1,3-Diisocyanatocyclohexan, 1,2-Diisocyanatocyclohexan, 1,3-Diisocyanatocyclopentan, 1,2-Diisocyanatocyclopentan, 1,2-Diisocyanatocyclobutan, 1-Methyl-2,4-diisocyanatocyclohexan, 1,6-Diisocyanato-2,2,4-trimethylhexan, 1,6-Diisocyanato-2,4,4-trimethylhexan, 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-1-(4-isocyanatobut-1-yl)-1,3,3-trimethyl-cyclohexan, 1-Isocyanato-2-(3-isocyanatoprop-1-yl)-cyclohexan, 1-Isocyanato-2-(2-isocyanatoeth-1-yl)-cyclohexan, 2-Heptyl-3,4-bis(9-isocyanatononyl)-1-pentyl-cyclohexan und Norbonandiisocyanatomethyl.

Das Verhältnis der Gesamtanzahl der Isocyanat-Gruppen zur Gesamtanzahl der Hydroxygruppen der an der chemischen Umsetzung zum chemischen Umsetzungsprodukt der weiteren Ausführungsform eingebrachten Stoffe beträgt bevorzugt zwischen größer oder gleich 0,6 und kleiner oder gleich 0,9.

Ebenfalls bevorzugt ist das chemische Umsetzungsprodukt der weiteren Ausführungsform ein Hydroxy-funktionalisiertes Polyurethan-Hotmelt-Präpolymer.

Bevorzugt hat mindestens eines der aliphatischen Polyester-Polyole eine Hydroxylzahl von zwischen größer oder gleich 200 mmol OH/kg und kleiner oder gleich 2000 mmol OH/kg. Dies entspricht im Falle von Polyester-Diolen einem zahlengemittelten mittleren Molekulargewicht zwischen 1.000 und 10.000 g/mol und im Falle von Polyester-Triolen zwischen 1.500 und 15.000 g/mol.

Weiter vorzugsweise hat mindestens eines der aliphatischen Polyester-Polyole mit einer Hydroxy-Funktionalität von zwischen größer zwei und kleiner vier eine Hydroxylzahl von zwischen größer oder gleich 200 mmol OH/kg und kleiner oder gleich 2000 mmol OH/kg.

Weiter vorzugsweise beträgt der von den aliphatischen Polyester-Polyolen mit einer Hydroxy-Funktionalität von zwischen größer zwei und kleiner vier stammende Stoffmengenanteil an Hydroxygruppen mindestens 2,5 %, bevorzugt mindestens 5 %, besonders bevorzugt mindestens 7,5 % aller an der zur Bildung des chemischen Umsetzungsproduktes der weiteren Ausführungsform eingebrachten Hydroxygruppen.

Besonders bevorzugt hat im Rahmen der weiteren Ausführungsform

• zumindest eines der aliphatischen Polyester-Polyole eine Hydroxy-Funktionalität von zwischen größer zwei und kleiner vier und eine Hydroxylzahl von zwischen größer oder gleich 200 mmol OH/kg und kleiner oder gleich 2000 mmol OH/kg und

• zumindest eines der aliphatischen Polyester-Polyole eine Hydroxy-Funktionalität von zwischen kleiner oder gleich zwei und größer eins und eine Hydroxylzahl von zwischen größer oder gleich 200 mmol OH/kg und kleiner oder gleich 8000 mmol OH/kg,

wobei der von den aliphatischen Polyester-Polyolen mit einer Hydroxy-Funktionalität von zwischen größer zwei und kleiner vier und einer Hydroxylzahl von zwischen größer oder gleich 200 mmol OH/kg und kleiner oder gleich 2000 mmol OH/ kg stammende Stoffmengenanteil an Hydroxygruppen zwischen einschließlich 2,5 % und einschließlich 50 %, bevorzugt zwischen einschließlich 5,0 % und einschließlich 40 %, besonders bevorzugt zwischen einschließlich 7,5 % und einschließlich 30 % aller an der zur Bildung des chemischen Umsetzungsproduktes eingebrachten Hydroxygruppen beträgt.

Ebenfalls bevorzugt hat im Rahmen der weiteren Ausführungsform

- zumindest eines der aliphatischen Polyester-Polyole eine Hydroxy-Funktionalität von zwischen größer zwei und kleiner vier und eine Hydroxylzahl von zwischen größer oder gleich 200 mmol OH/kg und kleiner oder gleich 2000 mmol OH/kg und

- zumindest eines der aliphatischen Polyester-Polyole eine Hydroxy-Funktionalität von zwischen kleiner oder gleich zwei und größer eins und eine Hydroxylzahl von zwischen größer oder gleich 200 mmol OH/kg und kleiner oder gleich 2000 mmol OH/kg,

wobei der von den aliphatischen Polyester-Polyolen mit einer Hydroxy-Funktionalität von zwischen größer zwei und kleiner vier und einer Hydroxylzahl von zwischen größer oder gleich 200 mmol OH/kg und kleiner oder gleich 2000 mmol OH/ kg stammende Stoffmengenanteil an Hydroxygruppen zwischen einschließlich 2,5 % und einschließlich 50 %, bevorzugt zwischen einschließlich 5,0 % und einschließlich 40 %, besonders bevorzugt zwischen einschließlich 7,5 % und einschließlich 30 % aller an der zur Bildung des chemischen Umsetzungsproduktes eingebrachten Hydroxygruppen beträgt.

Das chemische Umsetzungsprodukt der weiteren Ausführungsform ist chemisch verzweigt, aber unvernetzt und kann zu einem Haftklebstoff oder Haftstoff chemisch vernetzt werden. Die chemische Vernetzung des chemischen Umsetzungsproduktes erfolgt vorteilhaft durch Umsetzung des chemischen Umsetzungsproduktes mit einem Diisocyanat, Triisocyanat oder höherfunktionellem Isocyanat oder einem Gemisch der genannten Isocyanate, wobei das Verhältnis der Gesamtanzahl aller Isocyanat-Gruppen zur Gesamtanzahl aller Hydroxygruppen der an der chemischen Umsetzung zum chemischen Umsetzungsprodukt und der anschließenden chemischen Vernetzung zum Haftklebstoff oder Haftstoff insgesamt eingebrachten Stoffe kleiner 1,0, bevorzugt kleiner 0,95 und besonders bevorzugt kleiner oder gleich 0,9 beträgt.

Für den Vernetzungsschritt der weiteren Ausführungsform besonders vorteilhafte Isocyanate sind Isocyanuratringe enthaltende HDI-Trimere, zum Beispiel Desmodur® N 3300 von Bayer, das zusätzlich auch noch Pentamere, Heptamere und höher funktionelle Anteile enthält. Uretdionringe enthaltende HDI-Dimere wie zum Beispiel Desmodur® N 3400 von Bayer, das auch noch trifunktionelle Anteile enthält, sind ebenfalls geeignet. Geeignet sind auch Gemische der genannten Isocyanate sowie Gemische mit anderen Di- oder Polyisocyanaten.

Vorteilhaft für die chemische Umsetzung zum chemischen Umsetzungsprodukt sowie auch für den Vernetzungsschritt ist die Verwendung eines bismutcarboxylat- oder bismutcarboxylatderivathaltigen Katalysators oder Katalysatorgemisches, dessen Verwendung zur Beschleunigung von Polyurethan-Reaktionen bekannt ist. Ein derartiger Katalysator steuert die Haftklebeigenschaften des Polyurethans erheblich in der Weise, dass eine oberflächenspezifische Selektivität der Haftklebeigenschaften erreicht werden kann. Beispiele für Bismutcarboxylate sind Bismuttrisdodecanoat, Bismuttrisdecanoat, Bismuttrisneodecanoat, Bismuttrisoctanoat, Bismuttrisisooctanoat, Bismuttrishexanoat, Bismuttrispentanoat, Bismuttrisbutanoat, Bismuttrispropanoat oder Bismuttrisacetat.

Es können aber auch alle anderen dem Fachmann bekannten Katalysatoren eingesetzt werden, wie zum Beispiel tertiäre Amine oder zinnorganische Verbindungen.

Weiter vorzugsweise werden die Polyole und /oder Kettenverlängerer aus erneuerbaren Rohstoffquellen wie zum Beispiel durch Fermentation von Stärke oder Zucker hergestellt.

Zur Anpassung der Eigenschaften der erfindungsgemäß bereitgestellten Haftklebmasse kann das Polyurethan bzw. können die Polyurethane generell mit einem oder mehreren Additiven wie Klebrigmachern (Klebharzen), Weichmachern und/oder Alterungsschutzmitteln gemischt werden.

Vorzugsweise ist die erfindungsgemäß bereitgestellte Haftklebmasse jedoch frei von Klebrigmachern (Klebharzen) und Weichmachern, besonders bevorzugt frei von Klebrigmachern (Klebharzen), Weichmachern und Alterungsschutzmitteln und insbesondere frei von jeglichen Additiven, wobei die erfindungsgemäß eingesetzten sulfonierten Carbonsäureester selbstverständlich ausgenommen sind. Produktions- oder anderweitig bedingte Rückstände beliebiger Substanzen, die im Wesentlichen aus einer nicht vollständigen Entfernung resultieren, sowie Substanzgehalte im Bereich einer Allgegenwartskonzentration sind ohnehin unbeachtlich.

Unter der Bezeichnung "Klebharz", englisch "Tackifier Resins", versteht der Fachmann einen Stoff auf Harzbasis, der die Klebrigkeit erhöht.

Klebrigmacher sind beispielsweise Kohlenwasserstoffharze (zum Beispiel Polymere auf Basis ungesättigter $C_5$- oder $C_9$-Monomere), Terpenphenolharze, Polyterpenharze auf Basis von $\alpha$-Pinen und/oder ß-Pinen und/oder $\delta$-Limonen, aromatische Harze wie Cumaron-Inden-Harze oder Harze auf Basis von Styrol oder $\alpha$-Methylstyrol sowie Kolophonium und seine Folgeprodukte, zum Beispiel disproportionierte, dimerisierte oder veresterte Harze, zum Beispiel Umsetzungsprodukte mit Glycol, Glycerin oder Pentaerythrit. Bevorzugt werden Naturharze wie Kolophoniumharze und dessen Derivate verwendet. Besonders bevorzugt werden bioabbaubare Klebharze eingesetzt, wie etwa Zuckerester von bioabbaubaren Carbonsäuren wie der Benzoesäure. Ein Beispiel ist Succrosebenzoat.

Der Zusatz von nicht bioabbaubaren Klebrigmachern in geringfügigen Mengen bis zu 1 Gew.-% ist möglich, ohne dass die biologische Abbaubarkeit der Haftklebmasse verloren geht. Bei größeren Mengen, die der Masse zugesetzt werden, ist es allerdings möglich, dass deren biologische Abbaubarkeit nicht mehr gegeben ist. Bevorzugt ist die erfindungsgemäß bereitgestellte Haftklebmasse frei von nicht bioabbaubaren Klebrigmachern, besonders bevorzugt frei von jeglichen Klebrigmachern.

Geeignete einmischbare Weichmacher sind beispielsweise aliphatische und aromatische Mineralöle, Polyethylen- und Polypropylenglykol, Di- oder Poly-Ester der Phthalsäure, Citronensäure, Trimellitsäure oder Adipinsäure, flüssige Kautschuke (zum Beispiel niedermolekulare Nitril- oder Polyisoprenkautschuke), flüssige Polymerisate aus Buten und/oder Isobuten, Acrylsäureester, Polyvinylether, Flüssig- und Weichharze auf Basis der Rohstoffe von Klebharzen, Wollwachs und andere Wachse oder flüssige Silikone. Besonders bevorzugt werden Weichmacher aus nachwachsenden Rohstoffen verwendet, wie zum Beispiel das biobasierte Polyoxytrimethylenglycol Cerenol® von DuPont; Pflanzenöle, vorzugsweise raffinierte Pflanzenöle wie zum Beispiel Rapsöl und Sojabohnenöl; Fettsäuren oder Fettsäureester oder epoxidierte Pflanzenöle, zum Beispiel epoxidiertes Sojabohnenöl.

Insbesondere werden biologisch abbaubare Weichmacher eingesetzt, vorzugsweise Di- oder Poly-Ester der Citronensäure oder der Adipinsäure.

Weiter vorzugsweise wird der Weichmacher, insbesondere der biologisch abbaubare, in Mengen von bis zu 10 Gew.-%, besonders bevorzugt in Mengen von bis zu 5 Gew.-%, ganz besonders bevorzugt in Mengen von bis zu 2,5 Gew.-%, jeweils bezogen auf das Gesamtgewicht der Haftklebmasse, eingesetzt.

Wie bei den Klebrigmachern ist der Zusatz von jeglichen Weichmachern in geringfügigen Mengen bis zu 1 Gew.-% möglich, ohne dass die biologische Abbaubarkeit der Haftklebmasse verloren geht. Auch hier gilt, dass es bei größeren Mengen, die der Masse zugesetzt werden, möglich ist, dass deren biologische Abbaubarkeit nicht mehr gegeben ist. Bevorzugt wird daher auf Weichmacher verzichtet, oder es werden biologisch abbaubare Weichmacher eingesetzt.

Weitere mögliche Additive in der Haftklebmasse sind Füllstoffe, zum Beispiel Fasern, Ruß, Zinkoxid, Titandioxid, Kreide, Voll- oder Hohlglaskugeln, Mikroballons, Mikrokugeln aus anderen Materialien, Kieselsäure, Silikate, Nanopartikel, Holzmehl, Stärke und Stärke-Compounds und andere biobasierte Füllstoffe; Compoundierungsmittel und/oder Alterungsschutzmittel, letztere zum Beispiel in Form von primären und sekundären Antioxidantien, beispielsweise sterisch gehinderte Phenole wie Irganox 1010 und besonders bevorzugt Tocopherol (Vitamin E). Auch Lichtschutzmittel können zugesetzt werden.

Bei den Füllstoffen gilt das schon bei den Klebrigmachern und Weichmachern Gesagte: In geringfügigen Mengen bis zu 1 Gew.-% ist der Zusatz auch von biologisch nicht abbaubaren Füllstoffen möglich, ohne das die biologische Abbaubarkeit der Haftklebmasse wesentlich beeinträchtigt wird. Bei größeren Mengen, die dem mindestens einen Polyurethan zugesetzt werden, ist es möglich, dass die Haftklebmasse nicht mehr hinreichend biologisch abbaubar ist. Bevorzugt wird daher auf Füllstoffe, insbesondere auf nicht biologisch abbaubare, verzichtet. Biologisch abbaubare Füllstoffe hingegen können auch in größeren Mengen Verwendung finden.

Die erfindungsgemäß bereitgestellte Haftklebmasse enthält mindestens einen sulfonierten Carbonsäureester. Diese Ester wirken wegen ihres tensidischen Charakters als Netzhilfsmittel und verbessern auf diese Weise die Beschichtbarkeit der Haftklebmasse auf temporären Trägermaterialien, insbesondere auf Releaseschichten. Der tensidische Charakter der sulfonierten Carbonsäureester wird zum einen durch die ionische Struktur der Sulfonsäure und zum anderen durch die Alkylketten des dem Carbonsäureester zugrundeliegenden Alkohols bestimmt. Bevorzugt ist die dem sulfonierten Carbonsäureester zugrunde liegende (also noch zu sulfonierende) Carbonsäure eine Dicarbonsäure, insbesondere ist sie ausgewählt aus der Gruppe bestehend aus Maleinsäure, Fumarsäure, Methylmaleinsäure, Mesaconsäure und Itaconsäure. Die dem sulfonierten Carbonsäureester zugrunde liegende Alkoholkomponente ist bevorzugt ausgewählt aus der Gruppe bestehend aus 2-Ethylhexan-1-ol, 5-Ethylheptan-2-ol, 10-Methylundecan-1-ol, 2-Propylheptan-1-ol, 2-Ethyl-heptan-1-ol, Octadecan-1-ol, 2-Dodecanol, 2-Nonanol, Isobutanol, Tridecan-1-ol, Cyclohexanol, 1-Hexanol, Amylalkohol und Octan-1-ol. Der Ester kann, sofern ihm eine Dicarbonsäure zugrunde liegt, sowohl symmetrisch als auch unsymmetrisch aufgebaut - also mit zwei gleichen oder verschiedenen Alkoholen verestert - sein. Der zweite Alkoholrest kann im unsymmetrischen Aufbau auch kurze $C_2$-$C_8$-Alkylreste tragen. Bevorzugte Alkohole dafür sind Methanol, Ethanol, 1-Butanol, Isopropanol und Pentan-1-ol. Besonders bevorzugt ist der sulfonierte Carbonsäureester ein symmetrisch aufgebauter Dicarbonsäureester. Besonders bevorzugt sind die Säurekomponenten des sulfonierten Carbonsäureesters ausgewählt aus der Gruppe bestehend aus Sulfobernsteinsäure, Sulfoglutarsäure, Sulfo-2-Methylglutarsäure, Sulfo-3-Methylglutarsäure, Sulfo-α-ketoglutarsäure, Sulfoadipinsäure, Sulfopimelinsäure, Sulfoazelainsäure, Sulfosebacinsäure, Sulfobrassylsäure, Sulfofumarsäure, Sulfo-2,2-dimethylglutarsäure, Sulfosuberinsäure, Sulfo-oxalessigsäure, Sulfoglutaminsäure und Sulfoasparaginsäure. Ganz besonders bevorzugt ist der mindestens eine sulfonierte Carbonsäureester ein Dialkylester der Sulfobernsteinsäure, äußerst bevorzugt Sulfobernsteinsäure-bis-2-ethylhexylester.

Sulfonierte Carbonsäureester sind in der auf ein Trägermaterial zu beschichtenden Dispersion der erfindungsgemäß bereitgestellten Haftklebmasse bevorzugt zu insgesamt 0,1-3,0 Gew.-%, stärker bevorzugt zu insgesamt 0,2-2,5 Gew.-% und ganz besonders bevorzugt 0,3-1,5 Gew-%, jeweils bezogen auf das Gesamtgewicht der zu beschichtenden Dispersion, enthalten. Bezogen auf die erfindungsgemäß bereitgestellte Haftklebmasse selbst sind sulfonierte Carbonsäureester bevorzugt zu insgesamt 0,3 bis 2,3 Gew.-%, besonders bevorzugt zu insgesamt 0,6 bis 2,0 Gew.-%, insbesondere zu 0,9 bis 1,7 Gew.-%, jeweils bezogen auf das Gesamtgewicht der Haftklebmasse, enthalten.

Produkt des erfindungsgemäßen Verfahrens ist ein Klebeband, das eine wie vorstehend dargestellte Haftklebmasse umfasst. Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Stanzlinge, Etiketten und dergleichen. Das Klebeband kann in festen Längen wie zum Beispiel als Meterware oder aber als Endlosware auf Rollen (archimedische Spirale) zur Verfügung gestellt werden. Im einfachsten Fall besteht das erfindungsgemäß hergestellte Klebeband nur aus der erfindungsgemäß bereitgestellten Haftklebmasse, die zum Zwecke der Lagerung und des Schutzes vor Verschmutzung mit einem Releaseliner bedeckt ist; ein solches Klebeband wird allgemein als Transferklebeband bezeichnet, und dem biologisch abbaubaren Träger.

Bevorzugt umfasst das erfindungsgemäß hergestellte Klebeband einen Träger. Der Träger kann ein Material ausgewählt aus der Gruppe bestehend aus Papier, Gewebe, Vlies und Folien aus Polyester, z.B. Polyethylenterephthalat (PET); Polyethylen, Polypropylen, z.B. verstrecktem Polypropylen; und Polyvinylchlorid enthalten. Bevorzugt enthält der Träger ein Material ausgewählt aus der Gruppe bestehend aus Papier; Gewebe aus Baumwolle, Hanf, Jurte oder Brennesselfasern; und Folien aus Polymilchsäure, Cellulose, modifizierter Stärke, Polyhydroxyalkanoat, biobasiertem Polypropylen oder biobasiertem Polyethylen.

Das erfindungsgemäß hergestellte Klebeband umfasst einen biologisch abbaubaren Träger. Insbesondere enthält der biologisch abbaubare Träger Papier, Gewebe, Polymilchsäure, Cellulose, modifizierte Stärke, ein Polyhydroxyalkanoat, einen Polyester PolEs, der zu mindestens 95 mol-% auf eine Monomerenzusammensetzung MonZ zurückgeführt werden kann, die aus

- mindestens einem $C_2$- bis $C_{12}$-Alkandiol und
- mindestens einer Dicarbonsäure ausgewählt aus der Gruppe bestehend aus Oxalsäure, Malonsäure, Bernsteinsäure, Glutarsäure, 2-Methylglutarsäure, 3-Methylglutarsäure, $\alpha$-Ketoglutarsäure, Adipinsäure, Pimelinsäure, Azelainsäure, Sebacinsäure, Brassylsäure, Fumarsäure, 2,2-Dimethylglutarsäure, Suberinsäure, Diglykolsäure, Oxalessigsäure, Glutaminsäure, Asparaginsäure, Itaconsäure, Maleinsäure und Terephthalsäure besteht oder der ein Polycaprolacton ist,

oder Blends oder Mehrschichtaufbauten aus den vorstehenden Materialien.

Die Monomerenzusammensetzung MonZ besteht besonders bevorzugt aus Butandiol und mindestens einer Dicarbonsäure, die aus der Gruppe bestehend aus Adipinsäure, Terephthalsäure und Bernsteinsäure ausgewählt ist.

Sofern der bioabbaubare Träger Polyester PolEs enthält, sind diese zu insgesamt mindestens 40 Gew.-%, bezogen auf das Gesamtgewicht des bioabbaubaren Trägers, enthalten. Der bioabbaubare Träger kann neben den bisher aufgeführten Materialien generell Füllstoffe enthalten. Bevorzugt enthält der bioabbaubare Träger bis zu 60 Gew.-% eines Füllstoffs oder mehrerer Füllstoffe, die ausgewählt aus der Gruppe bestehend aus Fasern, Ruß, Zinkoxid, Titandioxid; Calciumcarbonat, insbesondere Kreide; Voll- oder Hohlglaskugeln, Mikroballons, Mikrokugeln aus anderen Materialien, Kieselsäure, Silikaten, Nanopartikeln, Holzmehl, Stärke und Stärke-Compounds, Polymilchsäuren und Polyhydroxyalkanoaten sind. Besonders bevorzugt enthält der bioabbaubare Träger bis zu 60 Gew.-% mindestens eines Füllstoffs ausgewählt aus der Gruppe bestehend aus Polymilchsäuren und Polyhydroxyalkanoaten.

Besonders bevorzugt besteht der bioabbaubare Träger zu mindestens 95 Gew.-%, insbesondere zu mindestens 98 Gew.-%, ganz besonders bevorzugt zu 100 Gew.-%, jeweils bezogen auf das Gesamtgewicht des bioabbaubaren Trägers, aus Polymilchsäure, Polybutylensuccinat, einem Butandiol-Adipinsäure-Terephthalsäure-Copolymer oder einem Blend aus einem Butandiol-Adipinsäure-Terephthalsäure-Copolymer und Polymilchsäure. Der bioabbaubare Träger ist bevorzugt eine Folie.

Der bioabbaubare Träger kann weitere Additive enthalten, beispielsweise die in der Kunststofftechnik üblichen Zusatzstoffe wie Stabilisatoren; Nukleierungsmittel; Gleit- und Trennmittel wie Stearate (insbesondere Kalziumstearat); Weichmacher (Plastifizierer) wie beispielsweise Zitronensäureester (insbesondere Acetyl-tributylcitrat), Glycerinsäureester wie Triacetylglycerin oder Ethylenglykolderivate, Tenside wie Polysorbate, Palmitate oder Laurate; Wachse wie beispielsweise Erucasäureamid, Stearinsäureamid oder Behenamid, Bienenwachs oder Bienenwachsester; Antistatika, UV-Absorber; UV-Stabilisatoren; Antifog-Mittel oder Farbstoffe. Die Additive sind bevorzugt in Konzentrationen von 0 bis 5 Gew.-%, insbesondere von 0,1 bis 2 Gew.-%, bezogen auf das Gesamtgewicht des bioabbaubaren Trägers, enthalten.

Der Träger kann ein- oder beidseitig mit einer Haftklebmasse ausgerüstet sein. Im Falle einer beidseitigen Ausrüstung mit Haftklebmasse ist bevorzugt die zweite Haftklebmasse ebenfalls eine wie erfindungsgemäß beschriebene Haftklebmasse. Insbesondere besteht die Haftklebmasse bzw. bestehen die Haftklebmassen aus einem oder mehreren bevorzugten Polyurethan(en).

Des Weiteren kann der Träger rück- oder oberseitig, also der Klebstoffseite gegenüberliegend, einer antiadhäsiven physikalischen Behandlung oder Beschichtung unterzogen sein, insbesondere mit einem Trennmittel oder Release (gegebenenfalls mit anderen Polymeren abgemischt) ausgerüstet sein.

Beispiele für Trenn- oder - synonym bezeichnet - Releaseschichten sind solche aus Stearyl-Verbindungen (zum Beispiel Polyvinylstearylcarbamat, Stearylverbindungen von Übergangsmetallen wie Cr oder Zr, Harnstoffe aus Polyethylenimin und Stearylisocyanat) oder Polysiloxanen. Der Begriff "Stearyl" steht als Synonym für alle geraden oder verzweigten Alkyle oder Alkenyle mit einer C-Zahl von mindestens 10 wie zum Beispiel Octadecyl.

Geeignete Trennmittel umfassen weiterhin tensidische Releasesysteme auf Basis langkettiger Alkylgruppen wie Stearylsulfosuccinate oder Stearylsulfosuccinamate, aber auch Polymere, die ausgewählt sind aus der Gruppe bestehend aus Polyvinylstearylcarbamaten, zum Beispiel Escoat 20 von der Firma Mayzo, Polyethyleniminstearylcarbamiden, Chrom-Komplexen von $C_{14}$- bis $C_{28}$-Fettsäuren und Stearyl-Copolymeren, wie sie zum Beispiel in DE 28 45 541 A beschrieben sind. Ebenfalls geeignet sind Trennmittel auf Basis von Acrylpolymeren mit perfluorierten Alkylgruppen, Silikone, zum Beispiel auf Basis von Polydimethylsiloxanen, und Fluorsilikonverbindungen.

Trennschichten sind im erfindungsgemäß hergestellten Klebeband bevorzugt zu maximal 5 Gew.-%, bezogen auf das Gesamtgewicht des Klebebands, enthalten. Es hat sich gezeigt, dass ein Gehalt an Trennbeschichtung bis zu dieser Obergrenze einer biologischen Abbaubarkeit des ansonsten diesem Kriterium entsprechend ausgestatteten Klebebandes nicht entgegensteht.

Das erfindungsgemäß hergestellte Klebeband kann mit einer handelsüblichen Trennfolie bzw. einem Trennpapier laminiert sein, die bzw. das üblicherweise aus einem Basismaterial aus Polyethylen, Polypropylen, Polyester oder Papier aufgebaut ist, das ein- oder doppelseitig mit Silikon beschichtet ist. Ein solches Gebilde wird vielfach auch als Releaseliner bezeichnet und ist grundsätzlich kein Bestandteil des erfindungsgemäß hergestellten Klebebands. Bei dem hier betrachteten Releaseliner handelt es sich zunächst nicht um den im erfindungsgemäßen Verfahren eingesetzten, bevorzugt nicht biologisch abbaubaren Releaseliner, von dem aus die erfindungsgemäß bereitgestellte Haftklebmasse auf den Träger übertragen wird. Vielmehr ist der hier betrachtete Releaseliner zum Verbleib auf dem Klebeband bis zur Applikation desselben gedacht, der Releaseliner des Verfahrens hingegen zunächst nur zum Zwecke der Übertragung der Haftklebmasse. Neben den silikonisierten Releaselinern können ebenfalls die oben beschriebenen silikonfreien Releasesysteme verwendet werden. Zudem können auch nicht weiter modifizierte Polyolefin-basierte Folien wie insbesondere Polypropylen, Polyethylen und deren Blends bzw. mehrschichtige Polypropylen/Polyethylen-Verbundfolien eingesetzt werden.

Es ist jedoch auch möglich, dass der bis zur Applikation zum Verbleib auf dem Klebeband vorgesehene Releaseliner auch derjenige Releaseliner ist, von dem aus die erfindungsgemäß bereitgestellte Haftklebmasse auf den Träger übertragen wird. In diesem Sinne bevorzugt ist ein Schichtverbund aus PE und PP, insbesondere ein Schichtverbund der Form PE-PP-PE, wobei auch im erstgenannten Fall die PE-Seite für die Beschichtung mit der erfindungsgemäß bereitgestellten, insbesondere lösemittelbasierten Haftklebmasse vorgesehen ist.

Das erfindungsgemäß hergestellte Klebeband hat vorzugsweise eine Klebkraft auf einem Stahluntergrund von mindestens 0,5 N/cm und eine Scherdeformation von maximal 300 $\mu$m bei einer Belastung von 5N und einer Temperatur von 40 °C bei einem Stoffauftrag von 20 g/m$^2$. Diese Werte werden bevorzugt auch nach einer Lagerung von 3 Monaten bei 23 °C, 40 °C oder 70 °C erreicht.

Gegenstand der Erfindung ist wie vorstehend dargestellt ein Verfahren zur Herstellung eines biologisch abbaubaren Klebebandes, welches

- das Bereitstellen einer biologisch abbaubaren Haftklebmasse, wie vorstehend dargestellt, als Dispersion in mindestens einem organischen Lösemittel;
- das Beschichten dieser Dispersion auf einen Releaseliner, bevorzugt auf einen nicht biologisch abbaubaren Releaseliner;
- das Entfernen des organischen Lösemittels; und
- das Übertragen der Haftklebmasse auf einen biologisch abbaubaren Träger umfasst.

Insbesondere umfasst das Verfahren

- das Bereitstellen einer biologisch abbaubaren Haftklebmasse, wie vorstehend dargestellt, als Dispersion in mindestens einem organischen Lösemittel;
- das Beschichten dieser Dispersion auf einen Releaseliner, bevorzugt auf einen nicht biologisch abbaubaren Releaseliner;
- das Entfernen des organischen Lösemittels;
- das Übertragen der Haftklebmasse auf einen biologisch abbaubaren Träger, und
- das Entfernen des Releaseliners.

Bezüglich der Ausgestaltungsmöglichkeiten des biologisch abbaubaren Trägers gilt das oben Gesagte.

Unter dem Begriff "Dispersion" wird im Kontext der Erfindung ein System aus mehreren Phasen verstanden, von denen eine, nämlich das mindestens eine organische Lösemittel, kontinuierlich und mindestens eine weitere, nämlich die Haftklebmasse, fein verteilt ist. Ausdrücklich eingeschlossen in den Bedeutungsgehalt des Begriffs "Dispersion" ist eine molare Dispersion, also die molar-disperse Verteilung der Haftklebmasse in dem bzw. den Lösemittel(n) und somit eine Lösung der Haftklebmasse darin. Der Begriff "Dispersion in mindestens einem organischen Lösemittel" bedeutet, dass die Haftklebmasse im Rahmen des erfindungsgemäßen Verfahrens nicht als wässrige Dispersion vorliegt.

Das erfindungsgemäße Verfahren profitiert insofern von der mindestens einen sulfonierten Carbonsäureester einschließenden Zusammensetzung der erfindungsgemäß bereitgestellten Haftklebmasse, als sich mit dieser eine deutliche Verbesserung der Benetzung des nicht biologisch abbaubaren Releaseliners erzielen lässt. Dieser kann im erfindungsgemäßen Verfahren nur dem Übertrag der Haftklebmasse auf den biologisch abbaubaren Träger dienen, also als sogenannter Prozessliner verwendet werden; alternativ kann er aber auch nach dem Aufbringen der erfindungsgemäß bereitgestellten Haftklebmasse auf den Träger bis zur Applikation des Klebebandes auf ihr verbleiben. Der Einsatz als Prozessliner ermöglicht die indirekte Beschichtung eines biologisch abbaubaren Trägers mit der biologisch abbaubaren Haftklebmasse, da das Problem der mangelnden Temperatur- und Lösemittelbeständigkeit biologisch abbaubarer Trägermaterialien umgangen werden kann.

Die erfindungsgemäß bereitgestellte Haftklebmasse kann partiell oder vollflächig auf den biologisch abbaubaren Träger aufgetragen werden. Die Beschichtung kann auch in Form eines oder mehrerer Streifen in Längsrichtung (Maschinenrichtung) erfolgen, gegebenenfalls in Querrichtung, sie ist bevorzugt aber vollflächig.

Der Stoffauftrag (Beschichtungsstärke) der Haftklebmasse auf dem Träger beträgt bevorzugt 5 bis 200 g/m$^2$, stärker bevorzugt 10 bis 75 g/m$^2$ und besonders bevorzugt 15 bis 50 g/m$^2$.

Vorteilhaft kann die Verwendung eines Haftvermittlers, einer so genannten Primerschicht, zwischen Trägermaterial und Haftklebmasse oder eine physikalische Vorbehandlung der Trägeroberfläche zur Verbesserung der Haftung der Klebmasse auf dem Trägermaterial sein. Der vorstehend beschriebene Übertrag der erfindungsgemäß bereitgestellten Haftklebmasse auf den biologisch abbaubaren Träger umfasst auch den Auftrag auf einen mit einer Primerschicht versehenen, biologisch abbaubaren Träger.

Als Primer sind die bekannten Dispersions- und Lösungsmittelsysteme verwendbar, zum Beispiel solche auf Basis von Isopren- oder Butadien-haltigem Kautschuk, Acrylatkautschuk, Polyvinyl-, Polyvinyliden- und/oder Cyclokautschuk. Isocyanate oder Epoxyharze als Additive verbessern die Haftung und erhöhen zum Teil auch vorteilhaft die Scherfestigkeit des Haftklebstoffes. Der Haftvermittler kann auch mittels einer Coextrusionsschicht auf die Trägerfolie aufgebracht werden. Unter dem Aspekt der biologischen Abbaubarkeit des erfindungsgemäß hergestellten Klebebandes wird bevorzugt ein zumindest teilweise bioabbaubarer Primer verwendet. Besonders bevorzugt wird kein Primer verwendet. In den erfindungsgemäß hergestellten Klebebändern reicht die erzielbare Verankerungskraft zwischen Klebmasse und Träger in der Regel aus, so dass vorteilhaft auf einen Primer verzichtet werden kann. Ggf. wird auf physikalische Methoden zur Oberflächenbehandlung zurückgegriffen, beispielsweise auf Beflammung, Corona und Plasma.

Weiter kann das Trägermaterial vor- beziehungsweise nachbehandelt werden. Gängige Vorbehandlungen sind Hydrophobieren, geläufige Nachbehandlungen sind Kalandern, Tempern, Kaschieren, Stanzen und Eindecken.

Das mindestens eine organische Lösemittel des erfindungsgemäßen Verfahrens umfasst bevorzugt ein Lösemittel ausgewählt aus der Gruppe bestehend aus Isopropanol, Toluol, niedrigsiedenden Alkangemischen und Butanon. Hierbei hat sich überraschend gezeigt, dass die Zugabe von Isopropanol die Vernetzung des Polyurethans, wie es in Gestalt einer Reaktion des Alkohols mit dem Isocyanat zu erwarten gewesen wäre, nicht stört. Es hat sich gezeigt, dass bei Verwendung von Isopropanol die Benetzung des Releaseliners mit der Dispersion der erfindungsgemäß bereitgestellten Haftklebmasse besonders verbessert ist. Das mindestens eine Lösemittel des erfindungsgemäßen Verfahrens umfasst daher besonders bevorzugt Isopropanol. Das bzw. die Lösemittel des erfindungsgemäßen Verfahrens können nach dem Beschichten der Dispersion der Haftklebmasse auf den Releaseliner in einem Trockenkanal oder -ofen entfernt werden.

Ein weiterer Gegenstand der Erfindung ist die Verwendung eines sulfonierten Carbonsäureesters als Netzmittel in der Beschichtung von Polyurethan-basierten Haftklebmassen auf Trägermaterialien.

Beispiele

In Tabelle 1 sind zunächst die zur Herstellung der Präpolymere und der vernetzten Polyurethane verwendeten Stoffe aufgeführt. Die genannten Rohstoffe sind alle frei im Handel erhältlich.

Tabelle 1: Zur Herstellung der beispielhaften Muster verwendete Materialien

| Handelsname | Chemische Bezeichnung/ Beschreibung | Zahlengemitteltes Molekulargewicht $M_n$ | OH- bzw. NCO-Zahl (mmol OH/kg bzw. mmol NCO/kg) | Funktio -nalität (f) | Hersteller/ Lieferant |
|---|---|---|---|---|---|
| Diole | | | | | |
| Capa 2043 ® | Polycaprolacton-Diol, Basis: 1,4-Butandiol (Starter), Caprolacton | 400 | 4991 | 2 | Perstorp |
| Desmophen 1652 ® | Polyester-Diol auf Basis 1,4-Butandiol, Ethylenglykol, Diethylenglykol, Adipinsäure | 2120 | 941 | 2 | Bayer |
| MP Diol ® | 2-Methyl-1,3-Propandiol (CAS-Nr.: 2163-42-0) | 90,12 | 22193 | 2 | Lyondel |
| Katalysator | | | | | |
| Coscat 83 ® | Bismuttrisneodecanoat, CAS-Nr.: 34364-26-6 | | | | Caschem |
| Isocyanate | | | | | |
| HDI | 1,6-Diisocyanatohexan (CAS-Nr.: 822-06-0) | 168 | 11891 | 2 | Sigma-Aldrich |
| Desmodur N 3300 ® | HDI-Trimer mit höher funktionellen Anteilen | ca. 680 | 5190 | ca. 3,4 | Bayer |
| Sulfocarbonsäureester | | | | | |
| Aerosol OT | Sulfobernsteinsäure-bis-2-ethyl-hexylester | | | | Cytec (Solvay Group) |

Ein Polyurethan-Präpolymer wurde hergestellt, indem zunächst Desmophen 1652 eingewogen und in einem üblichen beheiz- und evakuierbaren Labormischer (hier von der Firma PC Laborsystem) unter Vakuum bei einer Temperatur von 70 °C vorgelegt wurde. Sodann wurde Capa 2043 zugegeben und 20 Minuten lang ohne Vakuum eingemischt. Anschließend wurden die restlichen Stoffe entsprechend den in den Beispielen angegebenen Mengenverhältnissen zugefügt und 20 Minuten eingemischt. Zuletzt erfolgte die Zugabe des Diisocyanats (HDI), das 20 Minuten lang homogen eingemischt wurde. Die chemisch reagierende Mischung wurde zur Vervollständigung der Umsetzung 7 Tage lang bei 40 °C im Wärmeschrank gelagert.

Zur Vernetzung wurde das hergestellte Polyurethan-Präpolymer zunächst in der angegebenen Menge Aceton gelöst. Nach Zugabe des Vernetzers (Desmodur N3300) und des Katalysators (Coscat 83) zum gelösten Polyurethan-Präpolymer wurde die Mischung 5 Minuten gerührt. Im Falle der Zugabe eines sulfonierten Carbonsäureesters wurde dieser in Isopropanol gelöst, zugegeben und die Mischung für weitere 5 Minuten gerührt. Die Dispersion der chemisch reagierenden Haftklebmasse wurde auf einem handelsüblichen Laborstreichtisch (hier von der Firma SMO (Sondermaschinen Oschersleben GmbH)) mit Hilfe eines Streichmessers auf die PE-Seite einer Verbundfolie aus einer 28 $\mu$m LDPE-Außenschicht und einem 92 $\mu$m dicken Kern aus Impact-PP beschichtet. Das Lösemittel wurde anschließend bei 90 °C im Umlufttrockenschrank für 15 Minuten abgedampft. Die Spaltbreite beim Beschichten wurde so eingestellt, dass nach dem Abdampfen des Lösemittels ein Masseauftrag von 20 g/m$^2$ erreicht wurde. Anschließend wurden die vom Lösemittel befreiten Filme mit einer 40 $\mu$m dicken, biaxial verstreckten PLA-Folie (Nativia NTSS 40, Firma Taghleef) bedeckt und mit Gummirolle per Hand auflaminiert. Die Muster wurden 7 Tage lang bei 23 °C und 50% rel. Luftfeuchtigkeit gelagert.

Prüfmethoden

Die Messungen werden, wenn nicht anders angegeben, bei einem Prüfklima von 23 $\pm$ 1 °C und 50 $\pm$ 5 % rel. Luftfeuchte durchgeführt.

Die folgenden Prüfmethoden wurden eingesetzt, um die Ausgangsstoffe sowie die nach den beschriebenen Verfahren hergestellten Muster zu charakterisieren.

Molekulargewicht $M_n$

Die Bestimmung der zahlengemittelten mittleren Molekulargewichte $M_n$ erfolgt erfindungsgemäß mittels Gelpermeationschromatographie (GPC). Als Eluent wird THF (Tetrahydrofuran) mit 0,1 Vol.-% Trifluoressigsäure eingesetzt. Die Messungen erfolgen bei 25 °C. Als Vorsäule wird PSS-SDV, 5 $\mu$, $10^3$ Å, ID 8,0 mm $\times$ 50 mm verwendet. Zur Auftrennung werden die Säulen PSS-SDV, 5 $\mu$, 103 sowie $10^5$ und $10^6$ mit jeweils ID 8,0 mm x 300 mm eingesetzt. Die Probenkonzentration beträgt 4 g/l, die Durchflussmenge 1,0 ml pro Minute. Es wird gegen PMMA-Standards gemessen.

Hydroxylzahl

Die Bestimmung der Hydroxylzahlen erfolgt nach DIN 53240. Nach dieser Methode wird die Hydroxylzahl (OHZ) in der Einheit [mg KOH/g] angegeben. Zum Zwecke der Vereinfachung der Rezepturberechnungen in den aufgeführten Beispielen wurden die Hydroxylzahlen in die Einheit [mmol OH/kg] umgerechnet.

Dies erfolgte nach folgender Formel:

$$OHZ\ [mmol\ OH/kg] = OHZ[mg\ KOH/g]\ x1000/56{,}1$$

56, 1 ist dabei die Molmasse von KOH.

Hydroxy-Funktionalität (f)

Die Hydroxy-Funktionalität (f) wird aus dem zahlengemittelten, mittleren Molekulargewicht $M_n$ und der OH-Zahl (OHZ) nach folgender Gleichung errechnet:

$$f= M_n[g/mol]\ x\ OHZ\ [mmol\ OH/kg]/10^6.$$

Klebkraft

Die Prüfung der Klebkraft (Schälfestigkeit) erfolgte in Anlehnung an PSTC-1. Ein 2 cm breiter Streifen des Haftklebbandes, bestehend aus der 40 $\mu$m dicken, biaxial verstreckten PLA-Folie und dem darauf aufgetragenen, ca. 20 $\mu$m (20 g/m$^2$) dicken haftklebrigen Film, wurde auf der mit Aceton gereinigten Prüfplatte durch fünfmaliges doppeltes Überrollen mittels einer 5 kg Rolle verklebt. Die Prüfplatte wurde eingespannt und der Selbstklebstreifen über sein freies Ende mittels einer Zugprüfmaschine unter einem Schälwinkel von 180° mit einer Geschwindigkeit von 300 mm/min abgezogen. Die dafür notwendige Kraft wurde ermittelt. Die Messergebnisse wurden über drei Messungen gemittelt und normiert auf die Breite des Streifens in N/cm angegeben.

Bei den Prüfplatten handelte es sich um Stahlplatten.

Die Klebkraftmessungen erfolgten mit frisch verklebten Proben und mit Proben, die nach Durchführung der Verklebungen in einer Klimakammer gelagert wurden. Die Lagerbedingungen waren 3 Wochen bei 40 °C.

Mikroschertest

Dieser Test dient der Schnellprüfung der Scherfestigkeit von Klebebändern unter Temperaturbelastung.

Messprobenpräparation für Mikroschertest:
Ein aus dem jeweiligen Probenmuster geschnittenes Klebeband (Länge ca. 50 mm, Breite 10 mm) wurde auf eine mit Aceton gereinigte Stahl-Prüfplatte verklebt, so dass die Stahlplatte das Klebeband rechts und links überragte und dass das Klebeband die Prüfplatte am oberen Rand um 2 mm überragte. Die Verklebungsfläche der Probe betrug Höhe x Breite = 13 mm x 10 mm. Die Verklebungsstelle wurde anschließend mit einer 2 kg-Stahlrolle und einer Geschwindigkeit von 10 m/min sechsmal überrollt. Das Klebeband wurde bündig mit einem stabilen Klebestreifen verstärkt, der als Auflage für den Wegmessfühler diente. Die Probe wurde mittels der Prüfplatte senkrecht aufgehängt.

Mikroschertest:
Das zu messende Probenmuster wurde am unteren Ende mit einem Gewicht von 500 g belastet. Die Prüftemperatur betrug 40 °C, die Prüfdauer 30 Minuten (15 Minuten Belastung und 15 Minuten Entlastung). Die Scherstrecke nach der vorgegebenen Testdauer bei konstanter Temperatur wurde als Ergebnis in μm angegeben, und zwar als Maximalwert ["max"; maximale Scherstrecke durch 15 minütige Belastung].

Bestimmung der biologischen Abbaubarkeit

Die biologische Abbaubarkeit durch Kompostierung wurde nach DIN EN 13432 bestimmt Dabei handelt es sich um eine chemische Prüfung, bei der innerhalb der sechsmonatigen Prüfdauer ein Abbaugrad von 90 % relativ zu einer Referenzsubstanz in Gegenwart von Mikroorganismen oder Pilzen erreicht werden muss. Dabei sind die Bedingungen (Temperatur, Sauerstoff- und Feuchtigkeitsgehalt) genau definiert. Der Abbau muss zu Wasser, Kohlenstoffdioxid und Biomasse erfolgen. Es folgt eine chemische Untersuchung und Bewertung der Qualität des Komposts.
Ebenfalls erfolgt im Rahmen dieser Untersuchung eine Prüfung auf das Desintegrationsverhalten. Die Desintegration weist auf die physikalische Zerlegung eines Materials in sehr kleine Fragmente hin. Dabei müssen mindestens 90 % des Kunststoffs innerhalb von 12 Wochen zu Partikeln kleiner als 2 mm abgebaut sein. Nur wenn beide Tests erfüllt sind, gilt ein Stoff nach der DIN-Norm als biologisch abbaubar.

Benetzungsverhalten

Um ein geeignetes Maß für das Benetzungsverhalten zu finden, wurde die Dispersion der Haftklebmasse mit einem handelsüblichen Laborstreichtisch (hier von der Firma SMO (Sondermaschinen Oschersleben GmbH)) mit Hilfe eines Streichmessers auf die Trennfolie (hier eine Verbundfolie mit einer 28 μm LDPE-Außenschicht und einem 92 μm dicken Kern aus Impact-PP) beschichtet. Das Lösemittel wurde anschließend bei 90 °C im Umlufttrockenschrank für 15 Minuten abgedampft. Die Spaltbreite beim Beschichten wurde so eingestellt, dass nach dem Abdampfen des Lösemittels ein Masseauftrag von 20 g/m$^2$ erreicht wurde. Anschließend wurden die vom Lösemittel befreiten Filme auf eine Größe von 20 x 30 cm zurecht geschnitten. Zur Beurteilung des Benetzungsverhaltens wurden alle Bereiche mit einer Fläche von mehr als 1 mm$^2$ gezählt, in denen die Haftklebemasse den Träger nicht mehr vollständig benetzte. Muster mit mehr als 10 Spots werden dabei als unzureichend benetzt bewertet. Muster mit 5-10 Spots werden als teilweise benetzt beschrieben. Idealerweise weist das Muster weniger als 5 Fehlstellten auf und ist insbesondere frei von Spots/Fehlstellen.

Masse 1 (Vergleichsbeispiel, nicht erfindungsgemäß bereitgestellte Haftklebmasse)

Das Polyurethan-Präpolymer 1 setzte sich wie folgt zusammen:

| Rohstoff | Einwaage [g] |
|---|---|
| Desmophen 1652 | 62,53 |
| Capa 2043 | 6,35 |
| Coscat 83 | 0,08 |
| HDI | 6,04 |
| Summe | 75,0 |

Vernetzungsschritt

Polyurethan 1a:

| Rohstoff | Eingesetzte Masse [g] |
|---|---|
| PU-Präpolymer 1 | 75,0 |
| Aceton | 25,0 |
| Desmodur N 3300 ® | 3,14 |
| Coscat 83 | 0,08 |

Masse 2 (erfindungsgemäß bereitgestellte Haftklebmasse)

Das Polyurethan-Präpolymer 2 setzt sich wie folgt zusammen:

| Rohstoff | Einwaage [g] |
|---|---|
| Desmophen 1652 | 62,53 |
| Capa 2043 | 6,35 |
| Coscat 83 | 0,08 |
| HDI | 6,04 |
| Summe | 75,0 |

Vernetzungsschritt:

Polyurethan 2a:

| Rohstoff | Eingesetzte Masse 5 [g] |
|---|---|
| PU-Präpolymer 2 | 75,0 |
| Aceton | 25,0 |
| Isopropanol | 5,0 |
| Desmodur N 3300 ® | 3,14 |
| Aerosol OT | 1,0 |
| Coscat 83 | 0,08 |

Ergebnisse

| | Masse 1 (Vergleichsbeispiel) | Masse 2 (erfindungsgemäß) |
|---|---|---|
| Klebkraft Stahl sofort (N/cm) | 2,4 | 2,0 |
| Klebkraft Stahl 21 d @ 40 °C (N/cm) | 2,4 | 2,0 |
| max. Mikroscherweg 5N, 40 °C (μm) | 45 | 52 |
| Biologische Abbaubarkeit > 90 % (d) | 166 | 138 |
| Benetzung (Anzahl Spots) | 13 | 0 |

**Patentansprüche**

1. Verfahren zur Herstellung eines biologisch abbaubaren Klebebandes, umfassend

    - das Bereitstellen einer biologisch abbaubaren Haftklebmasse, enthaltend mindestens 60 Gew.-% mindestens eines Polyurethans sowie mindestens einen sulfonierten Carbonsäureester als Dispersion in mindestens einem organischen Lösemittel;
    - das Beschichten dieser Dispersion auf einen Releaseliner;
    - das Entfernen des organischen Lösemittels; und
    - das Übertragen der Haftklebmasse auf einen biologisch abbaubaren Träger.

2. Verfahren gemäß Anspruch 1, **dadurch gekennzeichnet, dass** das mindestens eine Polyurethan durch chemische Vernetzung eines Polyurethan-Präpolymers, erhältlich durch chemische Reaktion von

a) einem oder mehreren aliphatischen Polyester-Polyolen A mit einer Hydroxy-Funktionalität von 1,8 bis einschließlich 2 und einem zahlengemittelten Molekulargewicht von gleich/größer 1000 g/mol, bestimmt nach dem in der Spezifikation angegebenen Verfahren;

b) einer oder mehreren Verbindungen B mit einer Hydroxy-Funktionalität von 1,8 bis einschließlich 2 und einem zahlengemittelten Molekulargewicht von kleiner 1000 g/mol, bestimmt nach dem in der Spezifikation angegebenen Verfahren;

c) einem oder mehreren aliphatischen Diisocyanaten C,

erhältlich ist,

wobei das Verhältnis der Gesamtanzahl der Isocyanat-Gruppen zur Gesamtanzahl der Hydroxygruppen der an der chemischen Reaktion zum Aufbau des Präpolymers beteiligten Stoffe größer/gleich 0,4 und kleiner 1 ist.

3. Verfahren gemäß Anspruch 2, **dadurch gekennzeichnet, dass** das Verhältnis der Gesamtanzahl der Isocyanat-Gruppen zur Gesamtanzahl der Hydroxygruppen der an der chemischen Reaktion zum Aufbau des Präpolymers beteiligten Stoffe größer/gleich 0,75 und kleiner 1 ist.

4. Verfahren gemäß einem der vorstehenden Ansprüche, **dadurch gekennzeichnet, dass** der sulfonierte Carbonsäureester ein sulfonierter Dicarbonsäureester ist.

5. Verfahren gemäß einem der vorstehenden Ansprüche, **dadurch gekennzeichnet, dass** der sulfonierte Carbonsäureester ein symmetrisch aufgebauter sulfonierter Dicarbonsäureester ist.

6. Verfahren gemäß einem der vorstehenden Ansprüche, **dadurch gekennzeichnet, dass** der mindestens eine sulfonierte Carbonsäureester ein Dialkylester der Sulfobernsteinsäure ist.

7. Verfahren gemäß einem der vorstehenden Ansprüche, **dadurch gekennzeichnet, dass** das mindestens eine organische Lösemittel Isopropanol umfasst.

8. Verfahren gemäß einem der vorstehenden Ansprüche, **dadurch gekennzeichnet, dass** der biologisch abbaubare Träger Papier, Gewebe, Polymilchsäure, Cellulose, modifizierte Stärke, ein Polyhydroxyalkanoat, einen

Polyester PolEs, der zu mindestens 95 mol-% auf eine Monomerzusammensetzung MonZ bestehend aus

- mindestens einem $C_2$- bis $C_{12}$-Alkandiol und
- mindestens einer Dicarbonsäure ausgewählt aus der Gruppe bestehend aus Oxalsäure, Malonsäure, Bernsteinsäure, Glutarsäure, 2-Methylglutarsäure, 3-Methylglutarsäure, $\alpha$-Ketoglutarsäure, Adipinsäure, Pimelinsäure, Azelainsäure, Sebacinsäure, Brassylsäure, Fumarsäure, 2,2-Dimethylglutarsäure, Suberinsäure, Diglykolsäure, Oxalessigsäure, Glutaminsäure, Asparaginsäure, Itaconsäure, Maleinsäure und Terephthalsäure

zurückgeführt werden kann oder der ein Polycaprolacton ist,

oder Blends oder Mehrschichtaufbauten aus den vorstehenden Materialien enthält.

**Claims**

1. Method for producing a biodegradable adhesive tape, comprising

- providing a biodegradable pressure-sensitive adhesive comprising at least 60 wt% of at least one polyurethane, and

at least one sulfonated carboxylic ester
as a dispersion in at least one organic solvent;

- coating this dispersion onto a release liner;
- removing the organic solvent; and
- transferring the pressure-sensitive adhesive onto a biodegradable carrier.

**2.** Method according to Claim 1, **characterized in that** the at least one polyurethane is obtainable by chemical crosslinking of a polyurethane prepolymer obtainable by chemical reaction of

a) one or more aliphatic polyester polyols A having a hydroxyl functionality of 1.8 up to and including 2 and a number-averaged molecular weight of greater than/equal to 1000 g/mol, determined by the method indicated in the specification;
b) one or more compounds B having a hydroxyl functionality of 1.8 up to and including 2 and a number-averaged molecular weight of less than 1000 g/mol, determined by the method indicated in the specification;
c) one or more aliphatic diisocyanates C,

the ratio of the total number of isocyanate groups to the total number of hydroxyl groups in the substances involved in the chemical reaction for the synthesis of the prepolymer being greater than/equal to 0.4 and less than 1.

**3.** Method according to Claim 2, **characterized in that** the ratio of the total number of isocyanate groups to the total number of hydroxyl groups in the substances involved in the chemical reaction for the synthesis of the prepolymer is greater than/equal to 0.75 and less than 1.

**4.** Method according to any of the preceding claims, **characterized in that** the sulfonated carboxylic ester is a sulfonated dicarboxylic ester.

**5.** Method according to any of the preceding claims, **characterized in that** the sulfonated carboxylic ester is a symmetrically constructed sulfonated dicarboxylic ester.

**6.** Method according to any of the preceding claims, **characterized in that** the at least one sulfonated carboxylic ester is a dialkyl ester of sulfosuccinic acid.

**7.** Method according to any of the preceding claims, **characterized in that** the at least one organic solvent comprises isopropanol.

**8.** Method according to any of the preceding claims, **characterized in that** the biodegradable carrier comprises paper, woven fabric, polylactic acid, cellulose, modified starch, a polyhydroxyalkanoate, a

polyester PolEs which is derivable to an extent of at least 95 mol% from a monomer composition MonZ consisting of

- at least one $C_2$ to $C_{12}$ alkanediol and
- at least one dicarboxylic acid selected from the group consisting of oxalic acid, malonic acid, succinic acid, glutaric acid, 2-methyl glutaric acid, 3-methyl glutaric acid, $\alpha$-ketoglutaric acid, adipic acid, pimelic acid, azelaic acid, sebacic acid, brassylic acid, fumaric acid, 2,2-dimethyl glutaric acid, suberic acid, diglycolic acid, oxalacetic acid, glutamic acid, aspartic acid, itaconic acid, maleic acid and terephthalic acid

or which is a polycaprolactone,
or blends of or multilayer systems composed of the above materials.

## Revendications

**1.** Procédé de fabrication d'un ruban adhésif biodégradable, comprenant

- la fourniture d'une masse d'adhésif de contact biodégradable contenant au moins 60 % en poids d'un polyuréthane ainsi qu'au moins un ester d'acide carboxylique sulfoné sous forme d'une dispersion dans au moins un solvant organique ;
- l'application de cette dispersion sur une protection antiadhésive ;
- l'élimination du solvant organique ; et
- le transfert de la masse d'adhésif de contact sur un support biodégradable.

**2.** Procédé selon la revendication 1, **caractérisé en ce que** l'au moins un polyuréthane peut être obtenu par réticulation chimique d'un prépolymère de polyuréthane pouvant être obtenu par réaction chimique de

a) un ou plusieurs polyester-polyols aliphatiques A ayant une fonctionnalité hydroxyde 1,8 à 2, limite supérieure comprise, et une masse moléculaire moyenne en nombre supérieure ou égale à 1 000 g/mol, déterminée par le procédé indiqué dans le fascicule du brevet ;

b) un ou plusieurs composés B ayant une fonctionnalité hydroxy de 1,8 à 2, limite supérieure comprise, et une masse moléculaire moyenne en nombre inférieure à 1 000 g/mol, déterminée par le procédé indiqué dans le fascicule du brevet ;

c) un ou plusieurs diisocyanates aliphatiques C,

le rapport entre le nombre total des groupes isocyanate et le nombre total des groupes hydroxy des substances participant à la réaction chimique permettant la constitution du prépolymère étant supérieur ou égal à 0,4 et inférieur à 1.

3. Procédé selon la revendication 2, **caractérisé en ce que** le rapport entre le nombre total des groupes isocyanate et le nombre total des groupes hydroxy des substances participant à la réaction chimique permettant la constitution du prépolymère est supérieur ou égal à 0,75 et inférieur à 1.

4. Procédé selon l'une des revendications précédentes, **caractérisé en ce que** l'ester d'acide carboxylique sulfoné est un ester d'acide dicarboxylique sulfoné.

5. Procédé selon l'une des revendications précédentes, **caractérisé en ce que** l'ester d'acide carboxylique sulfoné est un ester d'acide dicarboxylique sulfoné de structure symétrique.

6. Procédé selon l'une des revendications précédentes, **caractérisé en ce que** l'au moins un ester d'acide carboxylique sulfoné est un ester dialkylique de l'acide sulfosuccinique.

7. Procédé selon l'une des revendications précédentes, **caractérisé en ce que** l'au moins un solvant organique comprend de l'isopropanol.

8. Procédé selon l'une des revendications précédentes, **caractérisé en ce que** le support biodégradable contient du papier, un tissu, du poly(acide lactique), de la cellulose, de l'amidon modifié, un polyhydroxyalcanoate, un polyester PolEs qui, à raison d'au moins 95 % en moles, peut être attribué à une composition de monomères MonZ constituée de

- au moins un alcanediol en $C_2$ à $C_{12}$ et
- au moins un acide dicarboxylique choisi dans le groupe consistant en l'acide oxalique, l'acide malonique, l'acide succinique, l'acide glutarique, l'acide 2-méthylglutarique, l'acide 3-méthylglutarique, l'acide $\alpha$-cétoglutarique, l'acide adipique, l'acide pimélique, l'acide azélaïque, l'acide sébacique, l'acide brassylique, l'acide fumarique, l'acide 2,2-diméthylglutarique, l'acide subérique, l'acide diglycolique, l'acide oxaloacétique, l'acide glutamique, l'acide asparagique, l'acide itaconique, l'acide maléique et l'acide téréphtalique,

ou qui est une polycaprolactone,
ou des mélanges ou des structures multicouches constituées des matériaux ci-dessus.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 200401880 A
- DE 102014211186 A
- JP 2007070422 A
- JP 63189486 A
- JP 08157798 A
- WO 2015189326 A1
- WO 2015189323 A1
- DE 2845541 A

**In der Beschreibung aufgeführte Nicht-Patentliteratur**

- **SATAS.** Handbook of Pressure Sensitive Adhesive Technology. 1999, 153-203
- *CHEMICAL ABSTRACTS,* 2163-42-0
- *CHEMICAL ABSTRACTS,* 4457-71-0
- *CHEMICAL ABSTRACTS,* 107-21-1
- *CHEMICAL ABSTRACTS,* 111-46-6
- *CHEMICAL ABSTRACTS,* 112-27-6
- *CHEMICAL ABSTRACTS,* 112-60-7
- *CHEMICAL ABSTRACTS,* 5124-30-1
- *CHEMICAL ABSTRACTS,* 822-06-0
- *CHEMICAL ABSTRACTS,* 34364-26-6